# EUROPÄISCHE PATENTANMELDUNG

(11) **EP 4 733 606 A1**
(43) Veröffentlichungstag der Anmeldung: **29.04.2026**
(21) Anmeldenummer: 24208879.7
(22) Anmeldetag: 25.10.2024
(51) Int. Cl.: F16B 19/10

(54) **BEFESTIGUNGS- ODER VERBINDUNGSMITTEL, VERFAHREN ZUR HERSTELLUNG DESSELBEN UND VERWENDUNG EINER FLIESSHÜLSE BEI DER DURCHFÜHRUNG DES VERFAHRENS**

(71) Anmelder: SFS Group Germany GmbH, 61440 Oberursel (DE)
(72) Erfinder: Felsberg, Matthias, 99817 Eisenach (DE); Börner, Ilka, 99842 Ruhla (DE); Schmauch, Matthias, 99947 Bad Langensalza (DE); Wehner, Philipp, 99817 Eisenach (DE)
(74) Vertreter: Keil & Schaafhausen Patentanwälte PartGmbB

(57) **Zusammenfassung**

Es werden ein Befestigungs- oder Verbindungmittel, insbesondere Blindniet oder Blindnietschraube, ein Verfahren zur Herstellung desselben und die Verwendung einer Fließhülse bei der Durchführung des Verfahrens beschrieben. Das Befestigungs- oder Verbindungmittel hat einen Körperabschnitt (2), einen Kopfabschnitt (4) und einen an dem Kopfabschnitt (4) angeordneten Kragenabschnitt (3). Der Körperabschnitt (2) ist stiftförmig ausgebildet. Der Kopfabschnitt (4) ist hülsenförmig ausgebildet und umgibt den Körperabschnitt (2) in Axialrichtung abschnittsweise. Der Kragenabschnitt (3) ist von einem offenen Ende des Kopfabschnitts (4) radial vorstehend ausgebildet und einteilig mit dem Kopfabschnitt (4) verbunden. Der Kopfabschnitt (4) ist an einem geschlossenen Ende in einem Übergangsbereich (6) einteilig mit einem proximalen Ende des Körperabschnitts (2) verbunden. Der Körperabschnitt (2), der Kopfabschnitt (4) und der Kragenabschnitt (3) sind einteilig aus einem zylindrischen Grundkörper (1) unter Ausbilden eines Ringspalts (5) zwischen dem Kopfabschnitt (4) und dem Körperabschnitt (2) durch Umformen ausgebildet.

## Beschreibung

Die vorliegende Erfindung betrifft ein einstückiges Befestigungs- oder Verbindungsmittel, insbesondere einen Blindniet oder eine Blindnietschraube, ein Verfahren zur Herstellung eines solchen Befestigungs- oder Verbindungsmittels sowie die Verwendung einer Fließhülse bei der Durchführung des Verfahrens.

Blindniete sind plastisch verformbare, zylindrische Verbindungselemente zur Herstellung einer Nietverbindung an einem Befestigungs- oder Fügegut. Sie weisen eine Blindniethülse zum Ausbilden eines Schließkopfs und einen an der Blindniethülse angeordneten Setzkopf auf. Im Inneren der Blindniethülse ist ein Nietdorn mit einem Nietdornkopf an seinem dem Setzkopf gegenüberliegenden Ende vorgesehen. Der Nietdornkopf liegt an dem offenen Ende der Blindniethülse an und verformt die Blindniethülse bzw. einen Umformbereich der Blindniethülse zu einem Schließkopf. Dabei wird das Befestigungs- oder Fügegut zwischen dem Setzkopf und dem Schließkopf eingeklemmt. Dieser Vorgang wird auch als Setzen des Blindniets bzw. des Befestigungs- oder Verbindungsmittels bezeichnet. Der Blindnietdorn kann ein Außengewinde aufweisen und wird dann als Blindnietschraube bezeichnet. Nach dem Setzen der Blindnietschraube können Gegenstände an dem Gewinde des Blindnietdorns der Blindnietschraube befestigt werden.

Blindniete sind üblicherweise mehrteilig aufgebaut. Sie weisen insbesondere die Blindniethülse mit dem Setzkopf als ein erstes Bauteil und den Nietdorn mit dem Nietdornkopf als ein zweites Bauteil auf. Dies erfordert zwei verschiedene Herstellverfahren, ist durch das Ausbilden insbesondere des Nietdornkopfs materialaufwendig und erfordert Maßnahmen, um den Nietdorn in der Blindniethülse vor dem Setzen vorläufig zu fixieren, damit der Nietdorn vor dem Setzen nicht aus Blindniethülse herausfällt. Die mehrteilige Fertigung bedeutet eine aufwändige sowie zeit-, energie- und CO2-intensive Herstellung. Es werden verschiedene Fertigungsverfahren und Fertigungsmaschinen benötigt, die jeweils bedient, gewartet und untergebracht werden müssen. Die separaten Bauteile müssen jeweils logistisch zusammengeführt und einen separaten Fügeprozess zugeführt werden und benötigen jeweils eigene Artikelnummern. Dies führt zu einem erhöhten Logistik- und Verwaltungsaufwand.

Das vorläufige Fixieren des Nietdorns in der Blindniethülse, häufig innerhalb des Innendurchmessers der Bohrung im Schaft der Blindniethülse, erfolgt üblicherweise durch einen Reibschluss. Dabei und auch während des Setzvorgangs werden Partikel von der Oberfläche des Nietdorns und/oder der Blindniethülse gelöst. Dies macht diese Art der zweiteiligen Blindniete nicht reinraumgeeignet.

Die EP 3 514 395 A1 offenbart eine Blindnietschraube mit einer Niethülse, die einen Setzkopf und einen Verformungsbereich zum Ausbilden eines Schließkopfs aufweist, und einen Bolzen mit einem Außengewinde, der mit einem Gewindeabschnitt aus dem Setzkopf vorsteht und in einem Verbindungsbereich mit der Niethülse verbunden ist. Die Blindnietschraube kann einstückig ausgebildet sein. Ein Verfahren zu ihrer Herstellung wird nicht beschrieben. In der Regel erfolgt das einteilige Ausbilden durch spanende Verfahren aus einem Vollstück und ggf. einem plastischen Verformen von Teilen, bspw. durch Umbiegen. Dies ist teuer und aufwendig, und konnte sich daher am Markt nicht durchsetzen. Das Umbiegen von Teilen führt auch zu einer Materialschwächung. Weitere urformende Verfahren, wie Spritzgießen, gewöhnlicherweise für Kunststoffwerkstoffe, oder additive Herstellungsverfahren sind technisch prinzipiell möglich, stellen jedoch bei den üblicherweise metallischen Werkstoffen der Befestigungsmittel keine wirtschaftliche Methode dar.

Allgemein sind Verfahren mit verschiedenen Press- oder Prägeschritten bekannt, mit denen Befestigungs- oder Verbindungsmittel, wie auch Blindnietschrauben, hergestellt werden können. Aus der DE 10 2008 038 185 B3 sind ein Verfahren und eine Vorrichtung bekannt, wobei aus metallischem Vollmaterial bestehende Befestigungs- oder Verbindungsmitteln mit radialen Außenkonturen, insbesondere Schrauben oder Gewindebolzen, in einem Kaltfließpressverfahren auf mehrstufigen Pressen hergestellt werden. Die WO 2013 152 758 A1 zeigt ein Verfahren und eine Vorrichtung zur spanlosen Herstellung eines Außengewindes auf Werkstücken aus Metall zur Verwendung als stabiles Verbindungs- oder Befestigungselement. Ein ähnliches Verfahren ist auch aus der DE 10 2012 103 179 A1 bekannt. Dieser Stand der Technik zeigt das Ausbilden von Außenkonturen an Befestigungsmitteln durch verschiedene Verfahren zum Fließpressen. Das Ausbilden eines einteiligen Blindniets ist weder beschrieben noch werden dafür geeignete Verfahrensschritte offenbart.

Die vorliegende Erfindung stellt sich daher die Aufgabe, ein Befestigungs- oder Verbindungsmittel, insbesondere ein Blindniet oder eine Blindnietschraube, vorzuschlagen, das in einem einfachen Verfahren möglichst spanfrei herstellbar ist.

Diese Aufgabe wird durch ein Befestigungs- oder Verbindungsmittel gemäß Anspruch 1, ein Verfahren zur Herstellung eines Befestigungs- oder Verbindungsmittels nach Anspruch 9 und die Verwendung einer Fließhülse zur Durchführung eines solchen Verfahrens nach Anspruch 15 gelöst.

Die Begriffe Befestigungsmittel und Verbindungsmittel austauschbar und gleichwertig verwendet. Insbesondere wird im Folgenden häufig nur der Begriff Befestigungsmittel verwendet, der auch Verbindungsmittel bedeuten soll. Alle in Bezug auf diese Begriffe beschriebenen Merkmale gelten insbesondere für einen Blindniet und/oder Blindschraube und umgekehrt. Eine axiale Richtung oder Axialrichtung meint immer eine Längsrichtung des Befestigungsmittels. Eine radiale Richtung meint eine radiale Richtung in einem rechten Winkel ausgehend von einer in axialer Richtung gerichteten Mittelachse des Befestigungsmittels, die also senkrecht zu der axialen Richtung gerichtet ist. Mit dem Begriff Durchmesser ist in der Regel der Außendurchmesser des bezeichneten Elements (Körper oder Öffnung) gemeint, sofern sich aus dem Zusammenhang nichts anderes ergibt. Der Durchmesser einer Öffnung in einem Element (Körper) kann auch als Innendurchmesser bezeichnet werden.

Erfindungsgemäß wird ein Befestigungsmittel mit einem Körperabschnitt, einem Kopfabschnitt und einem an dem Kopfabschnitt angeordneten Kragenabschnitt vorgeschlagen, wobei der Körperabschnitt stiftförmig ausgebildet ist. Stiftförmig soll bedeuten, dass der Körperabschnitt eine ausgezeichnete Längsrichtung hat, die der größten (axialen) Ausdehnung des Köperabschnitts entspricht und die Axialrichtung des Befestigungsmittels definiert. Die Mittelachse des Befestigungsmittels liegt mittig in dem Körperabschnitt. Der Kopfabschnitt ist hülsenförmig ausgebildet und umgibt den Körperabschnitt in Axialrichtung abschnittsweise. Der Kragenabschnitt ist von einem offenen Ende des Kopfabschnitts radial vorstehend ausgebildet. Der Kragenabschnitt erstreckt sich von dem Kopfabschnitt also (bezogen auf die Mittelachse) senkrecht nach außen (von der Mittelachse weg). Der Kragenabschnitt ist einteilig mit dem Kopfabschnitt verbunden. Der Kopfabschnitt ist an einem geschlossenen oder teilweise geschlossenen (proximalen) Ende einteilig mit einem (proximalen) Ende des Körperabschnitts verbunden. Der Körperabschnitt, der Kopfabschnitt und der Kragenabschnitt sind einteilig aus einem zylindrischen Grundkörper durch Kaltumformen ausgebildet. Dabei ist ein einseitig geschlossener oder teilweise geschlossener Ringspalt zwischen dem Kopfabschnitt und dem Körperabschnitt ausgebildet. Unter teilweise geschlossen wird insbesondere verstanden, dass an einer der offenen Stirnseite des Ringspalts gegenüberliegenden Stirnseite, an der der Kopfabschnitt mit dem Körperabschnitt verbunden ist (also in dem Übergangsbereich), abschnittsweise eine oder vorzugsweise mehrere Durchgansöffnungen ausgebildet sind, die (vorzugsweise in Axialrichtung) in den Ringspalt hindurchreichen. Dies wird später im Zusammenhang mit dem Ausbilden einer Sollbruchstelle noch ausführlicher beschrieben.

Bei einem Blindniet oder einer Blindnietschraube als Befestigungsmittel bildet der Körperabschnitt den Nietdorn respektive den Nietbolzen mit dem Schraubgewinde. Der Kopfabschnitt des Befestigungsmittels bildet die Blindniethülse mit dem Umformbereich, der bei dem Setzen des Blindniets den Schließkopf formt. Der Kragenabschnitt des Befestigungsmittels entspricht dem Setzkopf einer Blindniethülse. Diese Begriffe sind synonym zu verstehen.

Gemäß einer bevorzugten Ausführungsform kann der Durchmesser des Kragenabschnitts größer als, bevorzugt mindestens oder genau doppelt so groß wie, der Durchmesser des Kopfabschnitts sein. Der Durchmesser des Kopfabschnitts ist größer als, bevorzugt zumindest 1,5 mal so groß wie, der Durchmesser des Körperabschnitts. Eine Dicke des Kragenabschnitts, also dessen Ausdehnung in axialer Richtung, ist klein im Vergleich zu einer Höhe (axiale Ausdehnung) des Kopfabschnitts. Bevorzugt beträgt die Dicke des Kragenabschnitts nicht mehr als 1/5, besonders bevorzugt nicht mehr als 1/10 der Höhe des Kopfabschnitts. Die Höhe des Kopfabschnitts wiederum ist klein im Vergleich zu einer Länge (axiale Ausdehnung) des Körperabschnitts. Bevorzugt beträgt die Höhe des Kopfabschnitts nicht mehr als 1/2, besonders bevorzugt nicht mehr als 1/3 der Länge des Körperabschnitts.

Gemäß bevorzugter Ausführungsformen kann das Außenprofil des Kragenabschnitts (der den Setzkopf des Befestigungsmittels, insbesondere eines Blindniets, ausbildet) und/oder das Außenprofil des Kopfabschnitts (der - vor dem Setzen - den Umformbereich und - nach dem Setzen - den Schließkopf des Befestigungsmittels, insbesondere eines Blindniets, ausbildet) zylinderförmig oder anders profiliert, bspw. sechskantförmig, ausgebildet sein. Entsprechendes gilt auch für den Körperabschnitt.

Gemäß einer weiter bevorzugten Ausführungsform kann der Kragenabschnitt (respektive der Setzkopf) als Flachkopf, Flachrundkopf, Rundkopf, Senkkopf, Linsenkopf oder als individuell geformter Kopf ausgebildet sein.

Zwischen dem Kopfabschnitt und dem Körperabschnitt ist ein Ringspalt ausgebildet. Gemäß einer bevorzugten Ausführung entspricht dessen Innendurchmesser, bezogen auf eine Mittelachse des Befestigungsmittels, dem Durchmesser des Körperabschnitts. Der Außendurchmesser des Ringspalts ist kleiner als der Durchmesser des Kopfabschnitts. Dabei kann eine radiale Breite des Ringspalts (Differenz aus Außen- und Innendurchmesser als freier Raum) bevorzugt zumindest 1/2, besonders bevorzugt zumindest 2/3 der Differenz aus Außendurchmesser des Kopfabschnitts und Außendurchmesser des Körperabschnitts betragen. Eine Tiefe des geschlossenen Ringspalts zwischen dem Kopfabschnitt und dem Körperabschnitt, also eine Länge seiner axialen Ausdehnung, kann vorzugsweise größer sein als die Dicke des Kragenabschnitts. Bevorzugt kann sich die Tiefe des Ringspalts über den gesamten Kopfabschnitt bis zu einem Übergangsbereich zur einteiligen Verbindung von Körperabschnitt und Kopfabschnitt an den proximalen Enden von Körperabschnitt und Kopfabschnitt erstrecken. Bevorzugt kann eine Materialstärke des Übergangsbereich in Axialrichtung am geschlossenen Ende des Ringspalts kleiner als der Durchmesser des Körperabschnitts und größer als die Wandstärke des hülsenförmigen Kopfabschnitts sein. Besonders bevorzugt kann die Materialstärke des Übergangsbereichs mindestens dem 2-fachen der Wandstärke des hülsenförmigen Kopfabschnitts entsprechen. Hierdurch wird eine zuverlässige Verformung des Kopfabschnitts zum Ausbilden eines Schließkopfs mittels einem axialen Bewegen des Körperabschnitts (Nietdorn) relativ zum Körperabschnitt erreicht. Gemäß dieser bevorzugten Ausführungsform sollte gleichzeitig die Materialstärke des Übergangsbereichs höchstens 1/2, besonders bevorzugt höchstens 1/3, des Durchmessers des Körperabschnitts betragen, damit der Übergangsbereich eine gewisse Verformbarkeit relativ zu dem Körperabschnitt aufweist. Hierdurch wird ein unbeabsichtigtes Abreißen des Körperabschnitts von dem Kopfabschnitt beim Setzen des Befestigungsmittels respektive Blindniets vermieden.

Die einteilige Ausbildung des Befestigungsmittels hat prozesstechnisch den Vorteil, dass in das fertige Befestigungsmittel in einem mehrschrittigen Herstellungsverfahren aus einem Grundköper durch Umformen, und damit spanfrei, gefertigt werden kann. Hierfür wird vorzugsweise eine Fließpresse, bspw. eine Kaltfließpresse, mit verschiedenen Matrizen verwendet, was die Herstellung energetisch und ökonomisch günstig macht. Die Möglichkeit zur spanfreien Herstellung ermöglicht darüber hinaus Reinraumanwendungen. Ein weiterer Vorteil der einteiligen Ausbildung durch Umformen respektive Fließpressen liegt darin, dass das Befestigungsmittel respektive der Blindniet auch nach dem Setzen grundsätzlich geschlossen sein kann und so abdichtende bzw. wasserdichte Nietverbindungen realisierbar sind. Außerdem sind Nietdorn und Blindniethülse nach der Herstellung bereits einsatzfertig (d.h. zum Setzen des Blindniets) verbunden. Die Basisfunktion des Setzens des Niets bzw. Befestigungsmittels lässt sich also unmittelbar durchführen, ohne dass ein zusätzlicher Konfektionierungsschritt zur Komplementierung von Hohlniet und Nietdorn notwendig wird. Üblicherweise erfolgt bei Blindnieten aus metallischen Werkstoffen nach der Umformung in dem Fertigungsprozess noch eine Wärmebehandlung zur Verbesserung der Plastizität des Metallgefüges und dem Abbau von Eigenspannungen, was auch Gegenstand dieser Erfindung sein kann. Ein Herstellen von Halterillen im Bereich des Nietdornkopfes oder einer Haftsitzaufbeulung (zum Verklemmen des Nietdorns in einer Bohrung des Hohlniets) wie bei konventionellen Blindnieten entfällt. Die Herstellung ist in einem automatisierten Herstellungsverfahren einfach umsetzbar. Das Risiko der ungewollten Demontage von Hohlniet und Nietdorn vor dem Setzten, beispielsweise durch Erschütterungen beim Transport, ist bei diesem einteiligen Blindniet nicht existent.

Durch die einteilige Ausbildung entfällt der in der Regel massiv ausgebildete Nietdornkopf an Ende des Nietdorns. Dies führt im gesetzten Zustand des Blindniets neben einer Gewichtsersparnis zu einer geringen Schließkopfhöhe und benötigt insbesondere auf der häufig nicht zugänglichen Blindnietseite sehr wenig Bauraum. Dies gilt besonders bei nicht-abdichtenden Blindnietverbindungen, in den der Nietdorn (Köperabschnitt) je nach Ausführungsform einer Sollbruchstelle nach dem Setzen vollständig entfernt werden kann, zusammen mit einen in Verlängerung des Körperabschnitts liegenden Teil des Übergangsbereichs. Eine erfindungsgemäß beispielhafte Verwendung sind Schließzylinder bei Schlössern.

Dabei bleibt die Funktion herkömmlicher, zwei- oder mehrteiliger Befestigungsmittel, insbesondere Blindnietverbindungen, vollständig erhalten. Das Setzen mit konventionellen Blindniet-Setzgeräten bleibt ohne Einschränkungen möglich.

Das Umformen, auch bildsame Formgebung genannt, ist ein Fertigungsverfahren, bei dem Rohteile aus plastischen Werkstoffen (insbesondere Metalle und thermoplastische Kunststoffe) gezielt in eine andere Form gebracht werden, ohne dabei Material von den Rohteilen zu entfernen (wie bspw. bei einer spanenden Bearbeitung) oder hinzuzugegeben (wie bspw. beim Fügen). Bei der Erfindung erfolgt eine Massivumformung, bei der ein kompakter Körper, vorliegend insbesondere durch Fließpressen, gezielt umgeformt wird, in Abgrenzung zu einer Blechumformung, bei der ein näherungsweise zweidimensionales Werkstück verarbeitet wird.

Das Umformen kann erfindungsgemäß als Kaltumformen, Halbwarmumformen und/oder Warmumformen erfolgen, wobei die verschiedenen Umformverfahren bspw. in verschiedenen Verfahrensschritten auch kombinierbar sind.

Bei der Warmumformung wird das Werkstück vor der Umformung auf eine Temperatur über der Rekristallisationstemperatur des Werkstoffs erwärmt. Dadurch kommt es während der Umformung regelmäßig zur Rekristallisation, die einer Verfestigung des Werkstoffes entgegenwirkt. Eine Kaltumformung geschieht unterhalb der Rekristallisationstemperatur. Bei der Halbwarmumformung erwärmt man das Werkstück auf eine Temperatur unterhalb der Rekristallisationstemperatur, wodurch man die Vorteile der Warmumformung (leichtere Umformbarkeit und höheres Umformvermögen) mit den Vorteilen des Kaltumformens (Verfestigung, höhere Genauigkeit) verbinden kann. Entsprechend können die verschieden Umformerfahren erfindungsgemäß in verschieden Verfahrensschritten auch kombiniert werden, um die für den jeweiligen Verformungsschritt die entsprechenden Eigenschaften zu erreichen. Eine erfindungsgemäße Möglichkeit zur Herstellung besonders stabilerer Befestigungsmittel sieht vor, dass das Umformen des Grundkörpers zum Befestigungsmittel (vollständig oder im Wesentlichen vollständig) durch Kaltumformen erfolgt.

Gemäß einer bevorzugten Ausführungsform kann der Ringspalt derart ausgebildet sein, dass sein Außendurchmesser zumindest in dem axialen Bereich, in dem der hülsenförmige Kopfabschnitt den Köperabschnitt umgibt, in Axialrichtung konstant ist. Im Bereich des Kragenabschnitts kann ein den Außendurchmesser des Ringspalts begrenzender Rand (Ringspaltnut) abgerundet oder angefast sein, sodass der Ringspalt in einem axialen Bereich des Kragenabschnitts einen größeren Außendurchmesser aufweist. In Umfangsrichtung kann der Außendurchmesser des Ringspalts konstant (also zylinderförmig ausgebildet) sein oder einen variierenden Außendurchmesser aufweisen (also eine Profilierung aufweisen, bspw. als Sechskant).

Auch der Innendurchmesser des Ringspalts kann bevorzugt über die gesamte axiale Ausdehnung des Ringspalts konstant sein und insbesondere in jedem Punkt seiner axialen Ausdehnung dem Außendurchmesser des Körperabschnitts entsprechen, abgesehen von ggf. in den Mantelumfang des Körperabschnitts eingebrachten Konturen, wie bspw. einer Körper-Einkerbung.

Der Körperabschnitt des Befestigungsmittels kann bevorzugt zylindrisch ausgebildet sein. An einem distalen, also dem Kopfabschnitt gegenüberliegenden Ende des Körperabschnitts, kann der Körperabschnitt spitz zulaufen, bspw. einen kegel- oder kegelstumpfförmigen Abschnitt aufweisen, wobei letzteres eine Verletzungsgefahr beim Setzen des Befestigungsmittels vermindert. Gleiches gilt für eine Pyramidenform oder eine Pyramidenstumpfform.

Der Übergangsbereich an dem geschlossenen proximalen Ende des Kopfabschnitts und dem proximalen Ende des Körperabschnitts kann erfindungsgemäß im Außenbereich eine Stirnfläche (synonym auch als Stirnseite bezeichnet) des Befestigungs- oder Verbindungsmittels ausbilden, die in Axialrichtung ein proximales Ende des Befestigungs- oder Verbindungsmittels darstellt. Dieses Ende wird als proximales Ende bezeichnet, weil der Kopfabschnitt an diesem Ende einteilig mit den Körperabschnitt verbunden ist. Dies erfolgt in Abgrenzung zu dem distalen Ende des Körperabschnitts, in dem dieser freiliegt und mit keinen anderen Komponenten verbunden ist, und dem distalen offenen Ende des hülsenförmigen Kopfabschnitts, an dem der Kragenabschnitt ausgebildet ist.

Die Stirnfläche kann als flache Bodenfläche oder als Bodenfläche mit einem zentralen Axialvorsprung und einem radial davon vorstehendem Randbereich ausgebildet sein. Die radiale Ausdehnung des Axialvorsprungs kann in einer Ausführungsform in radialer Richtung insbesondere den Durchmesser des Körperabschnitts überdecken. Der radial vorstehende Randbereich kann in radialer Richtung insbesondere die Wandstärke des Kopfbereichs überdecken. Der Übergang zwischen dem radialen radial vorstehenden Randbereich und dem Axialvorsprung kann in radialer Richtung insbesondere im Bereich des Ringspalts liegen und stufenförmig, abgerundet oder abgeschrägt erfolgen. Die axiale Höhe des Axialvorsprungs kann vorzugsweise kleiner sein als der Durchmesser des Körperabschnitts. Der Rand der Bodenfläche und/oder des zentralen Axialvorsprungs kann abgeflacht oder abgefast sein. Anstelle eines Axialvorsprungs (wie vorstehend beschrieben) kann auch eine Axialausnehmung vorgesehen sein, In diesem Fall steht der radial vorstehende Randbereich (um die Axialausnehmung herum) auch in Axialrichtung (um die Axialausnehmung herum) vor. Die beschriebenen Dimensionen können entsprechend gelten.

Durch eine derartige Ausgestaltung der Stirnfläche des Übergangsbereichs wird ein konventioneller Nietdornkopf eines Blindniets ersetzt, der verhältnismäßig viel Material verbraucht und in Axialrichtung in der Regel höher ist als eine erfindungsgemäß vorgeschlagene Stirnfläche des Übergangsbereichs. So kann zum einen der Materialverbrauch minimiert und gleichzeitig eine Schließkopfhöhe und somit der benötigte Bauraum des gesetzten Blindniets weiter verringert werden. Ferner wird das Einführen des Blindnietes in die Bohrung der Befestigungsstelle des Bauteils erleichtert und verbessert die Lochfindung.

Gemäß einer bevorzugten Ausführungsform kann vorgesehen sein, dass in einer Stirnfläche des Übergangsbereichs eine Vertiefung ausgebildet ist, die als Sollbruchstelle zwischen dem Kopfabschnitt und dem Körperabschnitt nach dem Setzen des Befestigungs- oder Verbindungmittels dient. Die Vertiefung ist in vorzugsweise derart ausgebildet, dass durch die Vertiefung die Materialstärke im Übergangsbereich der einteiligen Verbindung von Kopfabschnitt und Körperabschnitt reduziert wird, insbesondere die Materialstärke zwischen dem Körperabschnitt und dem Kopfabschnitt im Bereich um den Ringspalt. Durch definiertes Reduzieren der Materialstärke im diesem Verbindungsbereich kann die Kraft zum Brechen der einteiligen Verbindung zwischen Kopfabschnitt und Körperabschnitt definiert reduziert und vorgegeben werden. Das Brechen findet im Abschluss des Setzvorganges des Blindniets statt. Geeignete Einstellungen kann der Fachmann je nach genauem Einsatzzweck ggf. experimentell ermitteln. Dabei ist durch den Fachmann zu berücksichtigen, dass für das Setzen des Befestigungsmittels die Verbindungen zwischen Kopfabschnitt und Körperabschnitt eine Kraft ohne Brechen der Verbindung aufnehmen muss, um den Schließkopf auszubilden durch axialen Zug mit einer Setzkraft an dem freien (distalen) Ende des Körperabschnitts. Dies ist sinnvoll, damit der Schließkopf eine gewünschte Verformung erfährt und dadurch die Haltekraft des Befestigungsmittels erreicht wird. Übersteigt eine aufgebrachte Kraft diese Setzkraft, soll die Verbindungen zwischen Kopfabschnitt und Körperabschnitt brechen. Dies kann eingestellt werden, indem die Materialstärke an für das Brechen relevanten Stellen des Übergangsbereichs beeinflusst wird.

In einer Weiterbildung dieser bevorzugten Ausführungsform kann die Vertiefung als in der Mitte einer Stirnfläche angeordnete Stirnflächen-Ausnehmung ausgebildet sein. Bei einem zentralen Axialvorsprung ist eine solche Stirnflächen-Ausnehmung vorzugsweise in diesem Axialvorsprung ausgebildet. Die Stirnflächen-Ausnehmung kann kegelförmig, kegelstumpfförmig oder zylindrisch ausgeformt sein. Ihre Tiefe (axiale Ausdehnung) und ihr Durchmesser (radiale Ausdehnung) können abhängig von dem Einsatzzweck durch den Fachmann derart gewählt werden, dass Verbindungsmaterial zwischen einer vorzugsweise tiefsten Stelle des Ringspalts und der Stirnflächen-Ausnehmung in der zuvor beschriebenen benötigten Materialstärke verbleibt. In einer bevorzugten Ausführungsform kann die Stirnflächen-Ausnehmung derart ausgebildet sein, dass sie in axialer Richtung mit dem Ringspalt überlappt, in radialer Richtung jedoch kleiner als der Innendurchmesser des Ringspalts ausgebildet ist. In einer anderen Ausführungsform kann die Stirnflächen-Ausnehmung derart ausgebildet sein, dass sie in radialer Richtung mit dem Ringspalt überlappt und in axialer Richtung nicht mit dem Ringspalt überlappt. Dies entspricht der vorbeschriebenen Axialausnehmung in der Stirnfläche.

In einer vorzugsweise alternativen Weiterbildung dieser bevorzugten Ausführungsform kann die Vertiefung als eine zu einer Mittelachse des Befestigungs- oder Verbindungsmittels konzentrische Stirnflächen-Nut ausgebildet sein, beispielsweise als umlaufende Ringnut oder segmentweise umlaufende Ringnut. Eine segmentweise umlaufende Ringnut weist Querstreben auf, die in radialer Richtung durch die Nut verlaufen und diese in verschiedene Segmente unterteilen. Durch die Stärke und Anzahl der Querstreben kann der Fachmann auch die Haltekraft der Verbindung geeignet beeinflussen. Gemäß einer beispielhaften Ausführung können sechs Querstreben vorgesehen sein. Bereiche zwischen den Querstreben der segmentierten Nut können bis in den Ringspalt hinein reichen. Hierdurch wird eine Perforierung erreicht, die ein besonders sauberes Ausbrechen des Körperabschnitts aus dem Übergangsbereich ermöglicht.

Ein Außendurchmesser und ein Innendurchmesser der zu einer Mittelachse des Befestigungs- oder Verbindungsmittels vorzugsweisen konzentrischen Stirnflächen-Nut können bevorzugt dem Außendurchmesser und dem Innendurchmesser des Ringspalts entsprechen. Eine Tiefe der Nut (axiale Ausdehnung) ist bevorzugt derart gewählt, dass Verbindungsmaterial zwischen der Stirnfläche und dem Ringspalt in der zuvor beschriebenen benötigten bzw. ermittelten Materialstärke verbleibt.

In einer Ausführungsform der Erfindung kann in einer Mantelfläche des Körperabschnitts eine in radialer Innenrichtung gerichtete Körper-Einkerbung ausgebildet sein. In radialer Innenrichtung bedeutet, dass die Körper-Einkerbung senkrecht zur Mittelachse des Befestigungsmittels ausgerichtet ist und sich von der Mantelfläche des Körperabschnitts auf die Mittelachse zu in den Körperabschnitt erstreckt. Entsprechend erfolgt durch die Körper-Einkerbung eine Schwächung des Körperabschnitts. Diese Schwächung des Körperabschnitts bildet eine Sollbruchstelle, wenn auf den Köperabschnitt eine die Setzkraft übersteigende Kraft ausgeübt wird, ähnlich wie zuvor beschrieben. Bei dieser Ausführungsform bricht der Köperabschnitt an der Sollbruchstelle ab. Der Übergangsbereich bleibt unbeschädigt bestehen.

Bei einer vorzugsweisen Ausgestaltung dieser Ausführungsform ist vorgesehen, dass die Körper-Einkerbung an einer axialen Position des Körperabschnitts ausgebildet ist, in dem der Körperabschnitt von dem hülsenförmigen Kopfabschnitt umgeben ist. Mit anderen Worten ist die Körper-Einkerbung, und damit die Sollbruchstelle des Körperabschnitts, in Axialrichtung innerhalb des Ringspalts angeordnet. Ein wichtiger Vorteil dieser Ausführungsform liegt darin, dass das Befestigungsmittel auch nach dem Setzen und Ausbilden des Schließkopf aufgrund der einteiligen Ausbildung von Körperabschnitt und Kopfabschnitt abdichtend geschlossen ist. Dies liegt daran, dass der Übergangsbereich zwischen Körperabschnitt und Kopfabschnitt nach dem Setzen intakt bleibt und der nur für den Setzvorgang benötigte Teil des Köperabschnitts (bei einem Blindniet also der Nietdorn) an einer auf dem Körperabschnitt selbst ausgebildeten Sollbruchstelle abbricht, ohne die weitere Struktur des Befestigungsmittels zu beeinträchtigen. Dabei ist bei dieser bevorzugten Gestaltungsvariante die Sollbruchstelle im Bereich des Kopfabschnitts ausgebildet und liegt (insbesondere nach dem Setzen) nahe bei dem Kragenabschnitt (Setzkopf eines Blindniets) in dem Kopfabschnitt, der den Schließkopf ausbildet.

Vorzugsweise kann die Körper-Einkerbung als von mindestens zwei Seiten in den Körperabschnitt eingreifende Vertiefungen oder als umlaufende Ringnut ausgebildet sein. Dies ermöglicht ein besonders einfaches und sauberes Abbrechen im Bereich des Körperabschnitts.

In einer erfindungsgemäß besonders bevorzugten Ausführungsform kann die Köper-Einkerbung bei nicht-gesetztem Befestigungsmittel an einer axialen Position des Köperabschnitts angeordnet sein, die in Axialrichtung mindestens um die Länge eines Setzwegs des Befestigungs- oder Verbindungmittels von einem stirnseitigen Ende des Kragenabschnitts in den Ringspalt verschoben ist.

Der Setzweg ist definiert als die Differenz der axialen Länge des Kopfabschnitts zwischen nicht-gesetztem Befestigungsmittel und gesetztem Befestigungsmittel. Die Länge des Kopfabschnitts kann einfacher Weise definiert sein durch den Abstand zwischen dem stirnseitigen Ende des Übergangsbereichs (proximales Ende des Kopfabschnitts) auf der einen Seite und dem stirnseitigen Ende des Kragenabschnitts (distales Ende des Kopfabschnitts, dem distalen Ende des Körperabschnitts zugewandt) auf der anderen Seite.

Damit liegt die Sollbruchstelle auch bei einem gesetzten Befestigungsmittel (Blindniet) an einer axialen Position auf dem Körperabschnitt, der von dem hülsenförmigen Kopfabschnitt oder dem daraus gebildeten Schließkopf oder zumindest dem Setzkopf (Kragenabschnitt) umgeben ist. So kann ein Verletzungsrisiko durch einen aus dem Befestigungsmittel vorstehenden Bereich des Körperabschnitts des gesetzten Befestigungsmittels (Blindniets) verringert oder vermieden werden. Außerdem ist das gesetzte Befestigungsmittel besonders kompakt und trägt sowohl im Kragenbereich (Setzkopf) als auch im Kopfbereich (Schließkopf) möglichst wenig von der Oberfläche eine Befestigungsguts oder Fügeguts auf, in dem das Befestigungs- oder Verbindungsmittel gesetzt ist.

Gemäß einer bevorzugten Ausführungsform der Erfindung kann das aus einem rotationssymmetrischen Grundkörper ausgebildete Befestigungsmittels mit dem Körper-, Kopf- und Kragenabschnitt grundsätzlich auch rotationssymmetrisch ausgebildet dies. Dies vereinfacht die Herstellung und eine automatisierte Massenproduktion. Er besteht bevorzugt aus einem metallischen Material. Auch organisches Material ist denkbar. Prinzipiell ist auch eine Fertigung aus Kunststoff möglich, abhängig von den verwendeten Herstellungsverfahren. Insbesondere für metallische Materialen kommen insbesondere Kaltformverfahren, wie Fließpressen, oder 3D-Druck, in Frage, die einfach und kostengünstig sind und einen vergleichsweise geringen Energiebedarf ausweisen (d.h. eine gute CO2-Bilanz) haben. Andere Bearbeitungsverfahren, z.B. spanabhebende, sind ebenfalls prinzipiell technisch möglich, wenn sie auch wirtschaftlich eher weniger interessant sind.

Grundsätzlich kommen auch Verfahren mit Wärmebehandlung in Frage, wie Sinterverfahren oder Druckgussverfahren. Für Kunststoffe eignet sich als Herstellungsverfahren auch ein Spritzgießverfahren. Jeweils geeignete Materialien oder Verfahren sind dem Fachmann bekannt, inkl. der erforderlichen nachgelagerten Prozesse wie Reinigen, Gleitschleifen, Polieren etc.

Je nach verwendeten Materialen kann im Anschluss an das Formen eine Wärmebehandlung des ausgeformten Befestigungsmittels, bspw. durch Glühen oder sequenzielles bzw. lokal partielles Glühen, ggf. auch zwischen verschiedenen Zwischenformschritten, erfolgen.

Auch unabhängig von einer grundsätzlich rotationssymmetrischen Ausbildung des Befestigungsmittels (unter denen auch Außenprofilierungen wie bspw. ein eine Sechskantform von Kragenbereich und/oder Kopfabschnitt verstanden werden) können (auch weitere als die bisher beschriebenen, bspw. die Sollbruchstelle) Sonderkonturen an einer äußeren Umfangsfläche des Körperabschnitts und/oder an einer äußeren oder inneren Umfangsfläche des Kopfabschnitts und/oder an der äußeren Umfangsfläche des Kragenabschnitts vorgesehen sein. Insbesondere können Sonderkonturen als Profilierungen gebildet werden. Bspw. kann eine in Form von Rillen oder Rändeln ausgebildete Futterbackengreifhilfe an einer äußeren Umfangsfläche des Körperabschnitts vorgesehen sein, die den Setzvorgang vereinfacht, indem ein Abrutschen beim Greifen des Nietdorns durch die Futterbacken des Verarbeitungsgerätes (Blindniet- / Blindnietmuttern-Setzgerätes) verhindert wird. Eine Profilierung oder Prägung an einer äußeren Umfangsfläche des Kopfabschnitts kann ein Greifen durch Greifwerkzeuge während der Produktion vereinfachen. Eine von einer Zylinderform abweichende Außenkontur des Kragenabschnitts und/oder des Kopfabschnitts und/oder des Körperabschnitts stellt weitere Funktionalitäten dar. Beispielsweise kann durch eine Sechskantform des Kopfabschnitts in Zusammenwirkung einer entsprechenden Form des Anwendungsbauteils formschlüssig Belastungen wie Drehmomente übertragen werden. Im Fall einer Blindnietschraube kann auch ein Gewinde am Körperabschnitt vorgesehen sein. In einer Ausführungsform des erfindungsgemäßen Befestigungsmittels kann der Kopfabschnitt eine zylindrische Außenkontur, also konstanten Durchmesser, aufweisen. In einer anderen Ausführungsform der Erfindung kann der Kopfabschnitt zumindest abschnittsweise eine von der Zylinderform abweichende Außenkontur, z. B. eine konische Außenkontur, aufweisen. Wie später noch beschrieben wird, kann eine einer Zylinderform abweichende und/oder konische Außenkontur während des Kaltumformens durch Verwenden einer Kopfmacher- bzw. Werkzeugform mit einer entsprechend konturierten Konturöffnung, die auch mehrteilig und zueinander beweglich ausgeführt sein kann, oder durch Prägen nach dem Kaltumformen erreicht werden.

Es können erfindungsgemäß mehrere Abschnitte mit einer von einer Zylinderform abweichenden und/oder konischen Außenkontur vorgesehen sein, wobei ein Abschnitt in axialer Richtung von dem offenen (distalen) Ende des Kopfabschnitts (an dem der Kragenabschnitt ausgebildet ist) hin zu dem geschlossenen (proximalen) Ende des Kopfabschnitts (an dem der Kopfabschnitt über den Übergangsbereich einteilig mit dem Körperabschnitt verbunden ist) sich radial weitend oder sich radial verjüngend ausgebildet sein kann. Der Konuswinkel zwischen der konischen Mantelline der Außenkontur und der Axialrichtung kann vorzugweise in einen Bereich zwischen etwa 2° (schwacher Konus) und etwa 20° (starker Konus) liegen. Es ist erfindungsgemäß auch möglich, in Axialrichtung verschiedene konischen Außenkonturen mit gleich oder gegenläufigen Konusrichtungen (radial weitend oder radial verjüngend entsprechend der vorstehenden Definition) und/oder mit gleich oder verschiedenen Konuswinkeln vorzusehen. In Umfangsrichtung des Kopfabschnitts können die Abschnitte durchgehend oder durch axial verlaufende Stege separiert sein. Eine derartige Konturierung kann das Umformen des Kopfabschnitts zu einem Schließkopf beim Setzen des Befestigungsmittels beeinflussen und/oder steuern. Der Fachmann kann geeignete Konturierungen je nach Einsatzzweck geeignet auswählen. Auch die Wandstärke des Kopfbereichs kann der Fachmann entsprechend dem Einsatzweck geeignet wählen, insbesondere durch Abmessungen von bei dem Kaltumformen verwendeten Formen.

In typischen Anwendungen liegt die Wandstärke des hülsenförmigen Kopfbereichs in einem Bereich zwischen 1/10 und 1/15 des Durchmessers des Kopfbereichs des Befestigungsmittels. Die fachmännische Ausgangsüberlegung ist, dass im gesamten Bereich des Befestigungsmittels die gleichen Festigkeitswerte (wie vom Ausgangsmaterial vorgegeben), bspw. nach einem Glühprozess, vorhanden sind. Die Festlegung von Maßen erfolgt allgemein anhand eines Flächenvergleichs, bei dem die ringförmige Fläche im Verformungsbereich mit der kreisförmigen Fläche im Körper- bzw. Stiftbereich verglichen wird. Der kreisförmige Flächeninhalt sollte größer dem ringförmigen Flächeninhalt sein, um eine sichere Umformung zu erreichen und ein verfrühtes Abreißen des Stiftes zu vermeiden. Die Wandstärke der Fließhülse bzw. der ringförmige Hohlraum im Hülsenbereich richtet sich nach der Herstellbarkeit dieses Werkzeuges und einer sinnvollen Standzeit.

Der Außendurchmesser des Kopfbereiches und Hülsenbereiches ist bevorzugt gleich den Abmessungen üblicher Blindverbinder.

Das erfindungsgemäße Befestigungsmittel kann durch ein erfindungsgemäßes Verfahren nach den Ansprüchen 9 bis 14 hergestellt werden, das nachstehend ausführlicher beschrieben wird. Alternativ wäre aber auch eine Herstellung eines erfindungsgemäßen einstückigen Befestigungsmittels z.B. durch 3D-Druck, Sintern, Druckguss oder Spritzgießen denkbar.

Das erfindungsgemäß besonders bevorzugte Verfahren zur Herstellung von Befestigungs- oder Verbindungsmitteln, insbesondere Blindnieten oder Blindnietschrauben, ist ein (vorzugsweise vollständig oder zumindest weitestgehend) spanloses Herstellungsverfahren mittels Umformung (insbesondere Massivumformung durch Kalt-, Halbwarm- oder Warmumformen), bei dem die Befestigungsmittel als Massenware zumindest die Form betreffend fertig fallend von einer Umformmaschine oder Presse hergestellt werden können. Erfindungsgemäß bevorzugt wird für das Verfahren eine Mehrstufenpresse verwendet. Besonders bevorzugt wird dieses Verfahren bei metallischem Material für das Befestigungsmittel verwendet.

Das vorgeschlagene Verfahren umfasst das Bereitstellen eines zylinderförmigen Grundkörpers und das Ausbilden eines stiftförmigen Körperabschnitts, eines den Körperabschnitt in einer Axialrichtung abschnittsweise hülsenförmig umgebenden Kopfabschnitts und eines radial von einem offenen Ende des Kopfabschnitts vorstehenden Kragenabschnitts durch Fließpressen des zylinderförmigen Grundkörpers. Bei dieser Umformung durch Fließpressen ist vorgesehen, dass zwischen dem Körperabschnitt und dem den Körperschnitt umgebenden Kopfabschnitt ein Ringspalt ausbildet wird und dass der Körperabschnitt, der Kopfabschnitt und Kragenabschnitt einteilig und damit stoffschlüssig, auch während des gesamten Herstellungsprozesses, miteinander verbunden sind.

Bezüglich des Bereitstellens des Grundkörpers ist es denkbar, dass Verfahrensschritte zur Herstellung des Grundkörpers Teil des Verfahrens sind. Es ist aber auch denkbar, dass der Grundkörper in einem vorgeschalteten Verfahren hergestellt und als Rohling dem Verfahren bzw. der zur Durchführung des Verfahrens verwendeten Maschine zugeführt wird.

Ein erfindungsgemäßes Verfahren zur Herstellung des Befestigungs- oder Verbindungmittels kann dabei bevorzugt die folgenden Verfahrensschritte aufweisen: Optional kann zunächst ein Ausgangsmaterial, z.B. ein zylindrischer Metalldraht, axial gerichtet und abgelängt werden. Dadurch entsteht der zylindrische Grundkörper, der bereitgestellt wird. Der zylindrische Grundkörper wird dann durch Pressen in einem mehrstufigen Fließpressverfahren unter Verwendung verschiedener Formen und/oder Matrizen derart umgeformt, dass durch Fließpressen, insbesondere Vorwärtsfließpressen, zunächst ein Körperabschnitt ausgebildet wird. In einen weiteren Verfahrensschritt wird der Kopfabschnitt durch Tiefziehen bzw. Tiefließen über eine erfindungsgemäße Fließhülse ausgebildet. Tiefziehen oder Tieffließen bedeuten in diesem Text ein Fließpressen, bei sich das behandelte Werkstück teilweise frei axial aus dem Werkzeug (bspw. einer Matrize respektive Kopfmacherform) herausbewegen (im Sinne von herausfließen) kann. Ferner wird in einem weiteren Verfahrensschritt durch Fließpressen, vorzugsweise Querfließpressen, ein Kragenabschnitt ausgebildet. Die Verfahrensschritte zum Ausbilden des Kopfabschnitts und des Verfahrensschritts zum Ausbilden des Kragenabschnitts können in verschiedener Reihenfolge und/oder mehrschrittig erfolgen, wobei einzelne Verfahrensschritte zum Ausbilden des Kopfabschnitts und zum Ausbilden des Kragenabschnitts auch abwechselnd durchgeführt werden können.

Gemäß einer konkreten Ausführungsform des erfindungsgemäß vorgeschlagenen Verfahrens kann vorgesehen werden, dass in einem Verfahrensschritt an dem zylinderförmigen Grundkörper der stiftförmige Körperabschnitt mit einem kleineren Durchmesser als dem Durchmesser des Grundkörpers an einem Ende des Grundköpers ausgebildet wird. Dies kann durch Vorwärtsfließpressen erfolgen, bei dem der Körper in eine geeignete Matrize eingepresst wird. Mögliche Details zu dem Verfahrensschritt werden später beschrieben.

Gemäß einem weiteren (von dem vorstehend beschrieben Verfahrensschritt ggf. auch unabhängigen) Verfahrensschritt zum Ausbilden des Kopfabschnitts kann der Körperabschnitt in einen Hohlzylinder einer Fließhülse aufgenommen werden. Der dem Körperabschnitt abgewandte Teil des Grundkörpers kann in eine Konturöffnung einer Kopfmacherform aufgenommen werden, wobei die Position der Kopfmacherform relativ zur Fließhülse dann in axialer Richtung über die Fließhülse bewegt oder gezogen wird. Hierbei können Kopfmacherform und/oder Fließhülse Ortsveränderungen erfahren, wobei in bevorzugter Ausführung die Fließhülse, zumindest für die Zeitspanne des eigentlichen Fließprozesses mit Werksstückberührung, ortsunveränderbar (feststehend) und die Kopfmacherform ortsveränderbar sind. Die Fließhülse und die Kopfmacherform können in der Umformmaschine, bevorzugt einer Mehrstufenpresse, gehalten bzw. fixiert sein. Dabei wird gemäß einer Ausführungsform der Erfindung der hülsenförmige Kopfabschnitt des Befestigungs- oder Verbindungsmittels erzeugt, wobei zwischen dem Körperabschnitt und dem Kopfabschnitt ein Ringspalt ausgebildet ist. Das Material des Grundkörpers fließt dabei über die Fließhülse und füllt den Raum zwischen der Außenumfangsfläche des Hohlzylinders der Fließhülse und der Innenumfangsfläche der Konturöffnung der Kopfmacherform. Hierbei wird der hülsenförmige Kopfabschnitt gebildet. Dieser Verfahrensschritt kann als Tiefziehen, Tieffließen oder Vorwärtsfließpressen bezeichnet werden, wobei sich in diesem Verfahrensschritt in der Regel auch der Körperabschnitt innerhalb der Fließhülse verlängert bzw. verlängern kann.

Der Hohlzylinder der Fließhülse ist vorzugsweise ein rotationssymmetrischer Hohlkörper, der nicht unbedingt als Hohlzylinder im mathematisch strengen Sinne mit parallel verlaufenden, glatten Innen- und Außenumfangsoberflächen ausgebildet sein muss. Die Oberflächen können bspw. konturiert sein und zumindest abschnittsweise konisch oder kurvenförmig ausgebildet sein. Vorzugsweise ist die zugrundliegende Grundform ein Hohlzylinder. Die Begriff Hohlzylinder schließt den Begriff "rotationssymmetrischer Hohlkörper" in dem vorbeschriebenen Sinne mit ein. Der Begriff "Hohlzylinder" soll auch bspw. mehrkantförmige Formen, bspw. eine Sechskantform, oder andere Formgebungen von Innen- und/oder Außenwand einschließen.

Der Verfahrensschritt zum Ausbilden des Körperabschnitts kann gemäß einer Ausführungsform der Erfindung der erste Verfahrensschritt bei dem Umformen des Grundkörpers zu dem Befestigungs- oder Verbindungsmittel sein.

Der weitere Verfahrensschritt zum Ausbilden des Kopfabschnitts kann unmittelbar auf den Verfahrensschritt zum Ausbilden des Körperabschnitts folgen. Es ist auch möglich, zwischen diesen beiden Verfahrensschritten weitere Verfahrensschritte auszuführen, bspw. einen oder mehrere Verfahrensschritte zum Ausbilden des Kragenabschnitts. Der Verfahrensschnitt zum Ausbilden des Ringspalts kann auch als Zwischenschritt zu mehreren Verfahrensschritten zum Ausbilden der Gesamtform durchgeführt werden.

Gemäß einer Ausführungsform dieses Verfahrensschritts zum Ausbilden des Kopfabschnitts kann der Hohlzylinder der Fließhülse einen konstanten Außendurchmesser aufweisen. Vorzugseise kann der Hohlzylinder der Fließhülse auch einen konstanten Innendurchmesser und entsprechend der Körperabschnitt in dem Bereich des Kopfabschnitts einen konstanten Außendurchmesser aufweisen. In diesem Fall weist der gebildete Ringspalt einen konstanten Innendurchmesser und einen konstanten Außendurchmesser auf.

Durch das einstückige Herstellungsverfahren eines Befestigungsmittels mit einem Kopfabschnitt (Niethülse) und einem Köperabschnitt (Nietdorn) kann gegenüber einer zweiteiligen Herstellung der Materialverbrauch reduziert werden, da kein konventioneller Nietdornkopf erforderlich ist, welcher verhältnismäßig viel Materialvolumen benötigt, um sicher an dem Kopfabschnitt zum Ausbilden eines Schließkopfes anzugreifen. Weiterhin kann die Anzahl der Fertigungsschritte reduziert werden, da nicht mehrere separate Teile hergestellt werden müssen. Ferner kann z.B. auf eine bei konventionellen zweiteiligen Blindnieten vorgesehene Profilierung des Nietdorns in unmittelbarer Nähe des Nietdornkopfes verzichtet werden, z.B. auf Halterillen zur Verriegelung des Restnietdorns beim gesetzten Blindniet, auf Halterillen zum Klemmen eines Drahtstiftes beim Anstauchen des Nietdornkopfes oder auf eine Haftsitzaufbeulung zum Verklemmen des Nietdorns in der Bohrung der Niethülse. So kann eine Erhöhung der Wertschöpfung durch integrierte Prozesse und Vermeidung von zusätzlichem Aufwand erreicht werden. Auch wird durch die Materialeinsparung eine Gewichtsreduktion des Befestigungsmittels erreicht.

In einer bevorzugten Ausführungsform kann vor dem Verfahrensschritt zum Ausbilden des Kopfabschnitts in einer Mantelfläche des Körperabschnitts eine in radialer Innenrichtung gerichtete Körper-Einkerbung ausgebildet werden an einer axialen Position des Körperabschnitts, die nach dem Verfahrensschritt zum Ausbilden des Kopfabschnitts innerhalb des Ringspalts liegt. Diese Variante ist besonders einfach, weil die Mantelfläche des Körperabschnitts frei zugänglich ist, solange der hülsenförmige Kopfabschnitt diesen axialen Bereich des Körperabschnitts noch nicht abdeckt. Weitere Merkmale der Körper-Einkerbung wurden bereits beschrieben und gelten für diesen Verfahrensschritt entsprechend. Insbesondere kann die Körper-Einkerbung so positioniert sein, dass die Körper-Einkerbung auch nach dem Setzen des Befestigungsmittels durch den hülsenförmigen Kopfabschnitt, der nach dem Setzen den Schließkopf ausbildet, und/oder durch den Kragenabschnitt abdeckt ist. Damit bricht der Körperschnitt nach dem Setzen des Befestigungsmittels an einer innerhalb der Befestigungsmittels befindlichen Position. Ebenso wäre ein Prägen eines Gewindes als Sonderkontur zur Herstellung einer Blindnietschraube vor dem Verfahrensschritt zum Ausbilden des Kopfabschnitts denkbar, sodass dieses überfließt wird und sich in den Kopfabschnitt des späteren Befestigungsmittels hinein erstreckt.

In einer alternativen Ausführungsform kann aber auch vorgesehen sein, dass nach dem Verfahrensschritt zum Ausbilden des Kopfabschnitts in einer Mantelfläche des Körperabschnitts eine in radialer Innenrichtung gerichtete Körper-Einkerbung ausgebildet wird an einer axialen Position des Körperabschnitts, die bevorzugterweise innerhalb des Ringspalts liegt. Hierzu kann eine geeignete Matrize verwendet werden, die in bevorzugter Ausführung in den Ringspalt hineinragt und eine Bewegung in der radialen Innenrichtung erlaubt. Eine konkrete Ausführungsform der Erfindung für diesen Verfahrensschritt und eine entsprechende Matrize mit weiteren optionalen Merkmalen werden später noch beschrieben.

Weitere Merkmale der Körper-Einkerbung wurden bereits beschrieben und gelten für diesen Verfahrensschritt entsprechend. Ein Vorteil dieser Ausführungsform liegt darin, dass die Körper-Einkerbungen nachträglich in den Körperabschnitt eingebracht werden können. Das Kaltverformen des Grundkörpers kann damit für Befestigungsmittel mit oder ohne Körper-Einkerbung in demselben Verfahren erfolgen, wodurch die Herstellung vereinheitlicht und effizienter wird.

Eine weitere Variante einer Ausführungsform zum Ausbilden der Körper-Einkerbung als Sollbruchstelle in dem Körperabschnitt, die vor oder nach dem Ausbilden des Kopfabschnitts durchgeführt werden kann, sieht vor, dass die Körper-Einkerbung durch Einschnürung ausgebildet wird. Dies kann als ein weiterer (zusätzlicher) Verfahrensschritt während des zuvor beschriebenen Verfahrens zur Herstellung durchgeführt werden. Die Einschnürung wird durch Ziehen an dem Körperabschnitt erzeugt. Vor dem Reißen schnürt der Körperabschnitt im Bereich der auszubildenden Körper-Einkerbung ein und verringert lokal die Querschnittsfläche des Körperabschnitts.

Gemäß einer weiteren, erfindungsgemäßen Ausführungsform kann vorgesehen sein, dass der Verfahrensschritt zum Ausbilden des Kragenabschnitts vorzugsweise mindestens zweischrittig erfolgt, wobei in einem ersten Verfahrensschritt zum Ausbilden des Kragenabschnitts ein Vorkragen mit kleinerer radialer Ausdehnung und größerer axialer Ausdehnung als der Kragenabschnitt gebildet wird und in einem zweiten Verfahrensschritt zum Ausbilden des Kragenabschnitts der Kragenabschnitt in seiner radialen und axialen Ausdehnung gebildet wird. Durch die zweistufige Ausbildung kann der Kragenabschnitt besonders präzise mit genau reproduzierbaren Eigenschaften ausgebildet werden. Außerdem wird eine bestmögliche Flexibilität zur Verarbeitung unterschiedlichster bevorzugt metallischer Werkstoffe gewährleistet. Da der Kragen den Setzkopf des Befestigungsmittels bildet, ist dies für reproduzierbare Verbindungseigenschaften des Befestigungsmittels vorteilhaft. Die ersten und zweiten Verfahrensschritte zum Ausbilden des Kragenabschnitts können unmittelbar aufeinander folgend oder nach Einfügen von Zwischenschritten, bspw. dem Verfahrensschritt zum Ausbilden des Kopfabschnitts, erfolgen.

Es sind erfindungsgemäß verschiedene Verfahrensschritte denkbar, die in beliebiger Reihenfolge ausführbar sind. So kann gemäß einem Ausführungsbeispiel der vorliegenden Erfindung vor dem Verfahrensschritt zum Ausbilden des Kopfabschnitts zunächst eine den Körperabschnitt umgebende Ringspalt-Nut in eine dem Köperabschnitt zugewandten Stirnfläche des Grundkörpers eingebracht werden, bevor diese Ringspalt-Nut beim Ausbilden des Kopfabschnitts zu dem Ringspalt vertieft wird. Diese Ringspalt-Nut kann eine Fase in der dem Körperabschnitt zugewandten Stirnfläche des Kragenabschnitts bilden. Sie kann insbesondere durch Pressen des Kragenabschnitts durch einen Kopfmacher gebildet werden. Durch die Ringspalt-Nut wird eine glatte Stirnfläche des Kragenabschnitts begünstigt, weil das den Kragenabschnitt bildende Material beim Tiefziehen des Kopfabschnitts nicht beeinflusst und verdrängt wird. Auch dient diese Fase zur bestmöglichen Zentrierung und Positionierung des Werkstücks mit der Fließhülse.

Erfindungsgemäß können ein oder mehrere weitere Verfahrensschritte als Zwischenschritte oder nach Ausbilden des Befestigungsmittels durch Kaltumformen erfolgen. Solche Verfahrensschritte können ein Waschen oder eine Oberflächenbehandlung, z.B. in Form einer Wärmebehandlung, des Befestigungsmittels betreffen. Bei einer Wärmebehandlung kann vorgesehen werden, dass ein Umformbereich des den Schließkopf formenden Kragenabschnitts partiell oder sequenziell geglüht wird oder dass das komplette Befestigungsmittel geglüht wird. Glühen bezeichnet dabei eine Form der Wärmebehandlung, die überwiegend der Verbesserung der fertigungstechnischen Eigenschaften wie Umformbarkeit oder Spanbarkeit dient. Die Härte wird reduziert, während die Biegsamkeit erhöht und innere Spannungen abgebaut werden. Es kann auch von einer Wärmebehandlung abgesehen werden. Weitere Oberflächenbehandlungen wie Beschichtungen sind je nach Werkstoff und Einsatzzweck möglich.

Die Erfindung bezieht sich auch auf eine Verwendung einer Fließhülse bei der Durchführung eines vorbeschriebenen Verfahrens, insbesondere nach einem der Ansprüche 9 bis 14, zum Ausbilden eines Ringspalts in einem Befestigungs- oder Verbindungsmittel aus einem zylindrischen Grundkörper mit einem sich axial von dem zylindrischen Grundkörper erstreckenden stiftförmigen Körperabschnitt, wobei der Durchmesser des Körperabschnitts kleiner ist als der Durchmesser des zylindrischen Grundkörpers. Die Fließhülse weist einen Hohlzylinder auf, vorzugsweise mit einem Sockelabschnitt an einem Ende des Hohlzylinders. Ferner entspricht ein Innendurchmesser des Hohlzylinders dem Durchmesser des Körperabschnitts, so dass Material aus dem Grundkörper in den Hohlzylinder einfließen kann. Ein Außendurchmesser des Hohlzylinders ist kleiner ist als Durchmesser des zylindrischen Grundkörpers, so dass Material aus dem Grundkörper zur Ausbildung des hülsenförmigen Kopfabschnitts an dem Hohlzylinder vorbei fließen kann.

Durch die Verwendung des Hohlzylinders bei dem vorbeschriebenen Tiefziehen oder Tiefließen des Grundkörpers über die Fließhülse werden zwei Prozessschritte gleichzeitig durchgeführt. Zum einen wird eine hülsenförmige Struktur (Kopfabschnitt respektive Blindniethülse) einteilig um einem bereits vorausgebildeten Teil (Körperabschnitt, Nietdorn) herum erzeugt. Zum anderen fließt gleichzeitig Material in den vorausgebildeten Körperabschnitt ein und verlängert diesen. Dadurch entsteht ein harmonischen Fließen um den Hohlzylinder herum, der das Ausbilden eines im Vergleich zum Gesamtdurchmesser des Befestigungsmittel dünnwandigen Kopfabschnitts mit guten und homogenen Materialeigenschaften ermöglicht, die für eine reproduzierbare Schließ- und Klemmkraft des Schließkopfes vorteilhaft sind. Die Homogenität des Kopfabschnitts ist besser als bei einer dicken, massiven Fließnadel, die von Material unter massiven Querfließbewegungen umströmt wird, abgesehen davon, dass eine massive Fließnadel das Ausbilden eines hülsenförmigen Kopfabschnitts um den Körperabschnitt herum gar nicht ermöglicht.

Die erfindungsgemäßen Befestigungsmittel, bzw. solche, die nach dem erfindungsgemäßen Verfahren hergestellt wurden, sind für das Setzen mit konventionellen Setzgeräten geeignet. Sie sind auch durch Blindnietautomaten setzbar, sodass das Setzen automatisierbar ist.

Der Fachmann versteht, dass viele der vorbeschriebenen Ausführungsformen einzelne Aspekte des erfindungsgemäßen Befestigungs- oder Verbindungsmittels, des erfindungsgemäßen Verfahren zur Herstellung desselben und der erfindungsgemäßen Verwendung einer Fließhülse bei der Durchführung des Verfahrens betreffen, die ohne weiteres miteinander kombiniert werden können, soweit dies nicht technisch unmöglich ist. Auch Kombinationen mehrerer verschiedener der vorbeschriebenen Ausführungsformen sind daher Teil der beschriebenen Erfindung.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder in beliebiger fachmännisch sinnvoller Kombination zum Gegenstand der Erfindung, auch unabhängig von ihrer Zusammenfassung in beschriebenen bzw. dargestellten Ausführungsbeispielen oder in den Ansprüchen.

Es zeigen:
- Fig. 1: den Querschnitt eines als Blindniet ausgebildeten Befestigungs- oder Verbindungsmittels gemäß einer erfindungsgemäßen Ausführungsform mit zwei Varianten in den Fig. 1a und 1b;
- Fig. 2: Querschnitte von Zwischenstufen bei der Herstellung eines Blindniets gemäß verschiedener Verfahrensschritte S1 bis S6 einer Ausführungsform des erfindungsgemäßen Verfahrens zum einteiligen Ausformen des Blindniets aus einem Grundkörper;
- Fig. 3: eine schematische Darstellung der Verfahrensschritte S1 bis S6 entsprechend den in Fig. 2 erläuterten Zwischenstufen;
- Fig. 4: schematisch verschiedene Zustände bei dem Ausbilden des Kopfabschnitts gemäß dem Verfahrensschritt S6 aus Fig. 3;
- Fig. 5: den Querschnitt des Hohlzylinders der Fließhülse aus Fig. 4 in zwei Varianten A und B in entsprechenden Detailausschnitten gemäß zwei verschiedenen erfindungsgemäßen Ausführungsformen;
- Fig. 6: drei Varianten a, b, c einer Sollbruchstelle im Übergangsbereich zwischen dem Körperabschnitt und dem Kopfabschnitt eines Befestigungs- oder Verbindungsmittels gemäß erfindungsgemäßen Ausführungsformen der Erfindung;
- Fig. 7: eine erfindungsgemäße Ausführungsform eines Befestigungs- oder Verbindungsmittels im Querschnitt mit einer Sollbruchstelle am Körperabschnitt bei einem nicht-gesetzen und einem gesetzten Befestigungs- oder Verbindungsmittel im Vergleich;
- Fig. 8: ein Matrizenwerkzeug im Querschnitt zum Einprägen einer Sollbruchstelle am Körperabschnitt gemäß einer Ausführungsform der Erfindung;
- Fig. 9: Backen des Matrizenwerkzeugs nach Fig. 8 im Querschnitt gemäß einer Ausführungsform der Erfindung;
- Fig. 10 a, b: schematisch im Querschnitt das Prägen von Sonderkonturen in den Kopfabschnitt ohne bzw. mit Fließhülse im Ringspalt;
- Fig. 11: ein Befestigungs- und Verbindungsmittel gemäß einer weiteren Ausführungsform im Querschnitt;
- Fig. 12: Querschnitt verschiedene Varianten (a) bis (d) für die Ausführung von Kragen 3 entsprechend verschiedener Ausführungsformen.

Nachstehend werden verschiedene Ausführungsformen der Erfindung anhand der Zeichnung näher beschrieben.

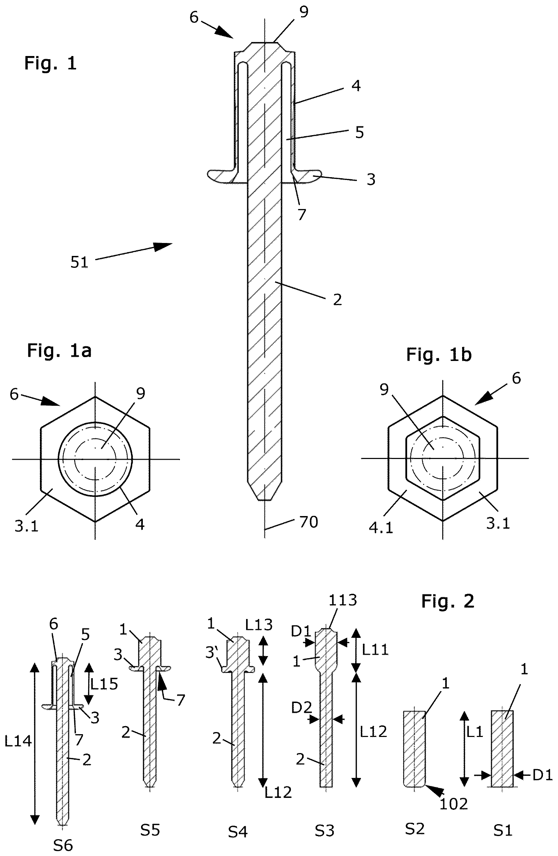

Figur 1 zeigt ein einstückig aus einem metallischen Grundkörper 1 (Fig. 2) ausgebildeten Blindniet 51 als eine bevorzugte Ausführungsform eines erfindungsgemäßen Befestigungs- und Verbindungsmittels, mit einem Körperabschnitt 2, einem Kopfabschnitt 4 und einem an dem Kopfabschnitt 4 angeordneten Kragenabschnitt 3.

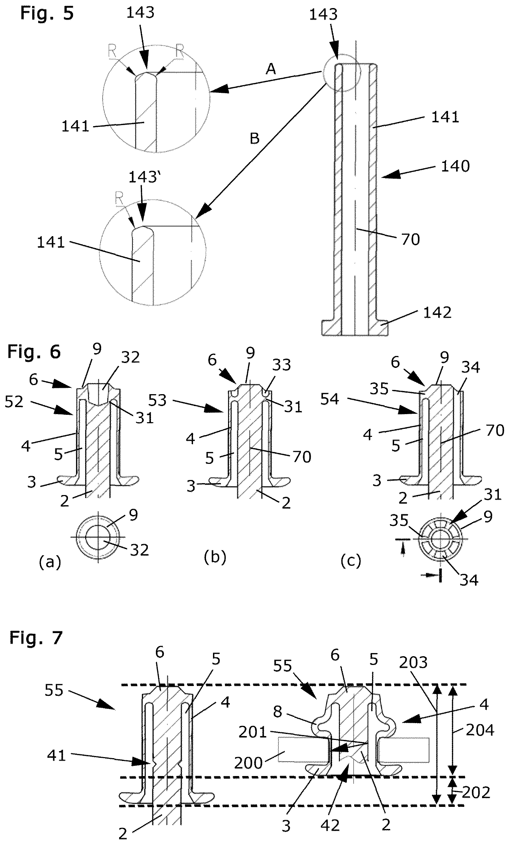

Der Körperabschnitt 2 ist stiftförmig oder dornförmig ausgebildet und dient als Nietdorn des Blindniets 51. Der Kopfabschnitt 4 ist hülsenförmig ausgebildet und umgibt den Körperabschnitt 2 in Axialrichtung abschnittsweise. Der Kopfabschnitt 4 dient als Niethülse mit einem Umformbereich, der beim Setzen des Blindniets einen Schließkopf 8 (Fig. 7) ausbildet. Die Axialrichtung des Blindniets 51 ist durch die Mittelachse 70 des Körperabschnitts 2 vorgegeben. Der Kragenabschnitt 3 ist von einem offenen Ende des Kopfabschnitts 4 radial vorstehend ausgebildet und einteilig mit dem Kopfabschnitt 4 verbunden. Der Kragenabschnitt 3 dient als Setzkopf des Blindniets 51.

Der Kopfabschnitt 4 ist an einem geschlossenen proximalen Ende in einem Übergangsbereich 6 einteilig mit einem proximalen Ende des Körperabschnitts 2 verbunden. Der Übergangsbereich 6 dient als Nietdornkopf des Blindniets 51 und überträgt eine Setzkraft auf den hülsenförmigen Kopfabschnitt 4, der sich unter der aufgebrachten Setzkraft zur Ausbildung des Schießkopfs verformt. Die Setzkraft greift an einem dem Übergangsbereich 6 gegenüberliegenden distalen Ende des Körperabschnitts 2 an und wird über den als Nietdorn wirkendenden Körperabschnitt 2 auf den Übergangsbereich 6 übertragen.

Erfindungsgemäß sind der Körperabschnitt 2, der Kopfabschnitt 4 und der Kragenabschnitt 3 einteilig aus dem zylindrischen Grundkörper 1 (vgl. Fig. 2) unter Ausbilden eines einseitig geschlossenen bzw. teilweise geschlossenen Ringspalts 5 zwischen dem Kopfabschnitt 4 und dem Körperabschnitt 2 durch Kaltumformen ausgebildet. Der Grundkörper 1, aus dem der Blindniet 51 in dem hier betrachteten Ausführungsbeispiel durch Kaltumformen ausgebildet ist, besteht aus metallischem Material.

In anderen Ausführungsbeispielen können der Körperabschnitt 2, der Kopfabschnitt 4 und der Kragenabschnitt 3 mittels Sinterverfahren, 3D-Druckverfahren, Druckgussverfahren oder Spritzgussverfahren ausgebildet sein.

In dem in Fig. 1 dargestellten Ausführungsbeispiel weist der als Setzkopf vorgesehene Kragenabschnitt 3 eine runden Außenkontur auf und ist als Flachrundkopf ausgebildet. Der Körperabschnitt 4 weist auch ein runde Außenform auf und ist als Hohlzylinder im mathematischen Sinne ausgebildet. In der Fig. 1a dargestellten Aufsicht auf den Umformbereich 6 mit der Stirnfläche 9 einer Variante der Ausführungsform gemäß Fig. 1 weist der Kragenabschnitt 3.1 eine sechskantförmige Außenform auf. In der Fig. 1b dargestellten Aufsicht auf den Umformbereich 6 mit der Stirnfläche 9 einer Variante der Ausführungsform gemäß Fig. 1 weisen der Kragenabschnitt 3.1 und der Kopfabschnitt 4.1 eine sechskantförmige Außenform auf.

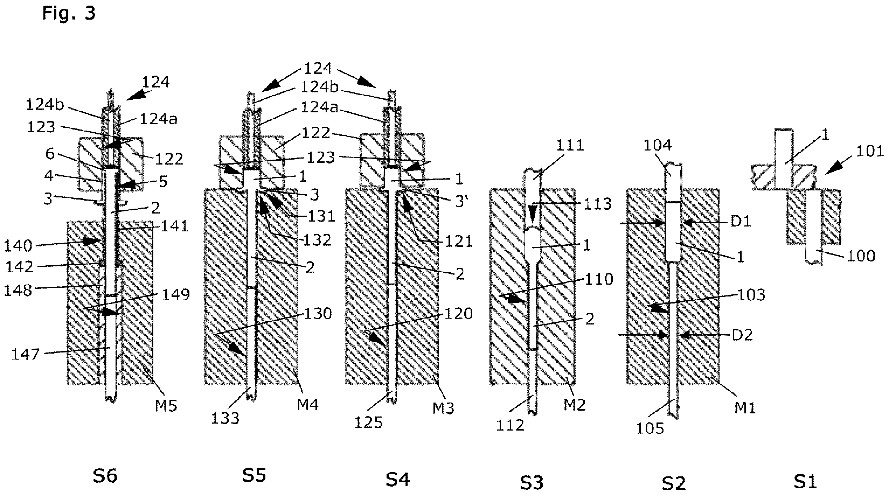

Bevor weitere erfindungsgemäße Merkmale oder Merkmalsvarianten des Blindniets 51 erläutert werden, soll eine Ausführungsform des erfindungsgemäßen Verfahrens beschrieben werden, mit dem der einteilige Blindniet 51 als Befestigungs- oder Verbindungsmittel hergestellt wird bzw. herstellbar ist. In Fig. 2 sind (von rechts nach links) Zwischenstufen des Blindniets 51 ausgehend von einem zylindrischen Grundkörper 1 entsprechend Verfahrensschritten S1 bis S6 einer Ausführungsform eines erfindungsgemäßen Verfahrens zur Herstellung eines Befestigungs- oder Verbindungsmittels dargestellt. Die jeweils zugehörigen Verfahrensschritte S1 bis S6 sind schematisch in Fig. 3 erläutert.

In einem ersten Verfahrensschritt S1 wird als Ausgangspunkt des Herstellungsverfahrens ein zylinderförmiger oder zylindrischer Grundkörper 1 aus einem verformbaren metallischen Material bereitgestellt, bspw. aus Aluminium oder einer Aluminiumlegierung, Stahl, Edelstahl, Kupfer oder einem anderen plastisch umformbaren Material. Diese können als Ausgangsprodukte in geeigneter Abmessung bezogen oder in einem ersten optionalen Arbeitsschritt herstellt werden. Fig. 3 zeigt das Ablängen des Grundkörpers 1 aus einem Draht 100 mit einem Durchmesser D1 in einer Schneidvorrichtung. Der Grundkörper weist eine Länge L1 auf.

In einem weiteren optionalen Verfahrensschritt S2 wird der Grundkörper 1 mit einem gefasten Ende 102 bzw. abgerundeten Kanten versehen, ohne dass sich der Durchmesser D1 und die Länge L1 des Grundkörpers 1 ändern. Dazu wird der Grundkörper 1 in eine erste Matrize M1 eine gesetzt, die eine Durchgangsöffnung 103 mit einem ersten Durchmesser D1 entsprechend dem Grundkörper 1 und einen zweiten Durchmesser D2 entsprechend dem in einem weiteren Verfahrensschritt S3 noch auszubildenden Körperabschnitt 2 aufweist. Am Übergang zwischen dem ersten Durchmesser D1 dem zweiten Durchmesser D2 ist die Durchgangsöffnung 103 abgerundet. Durch einen Kopfstift 104 wird der Grundkörper 1 gegen den abgerundeten Übergang gepresst und dabei das abgefaste Ende 102 an einem axialen Ende des Grundkörpers 1 eingeprägt. Nach dem Einprägen wird der Grundkörper 1 mit einem Auswertstift 105 aus der Matrize M1 ausgeworfen.

Die Durchmesser D1 und D2 bleiben im Wesentlichen konstant, wobei diese sich in weiteren Verfahrensschritten verfahrensbedingt marginal weiten bzw. ändern können. Dies wird hier nicht weiter beschrieben; im Kontext der Erfindung können die Durchmesser D1 und D2 als konstant angesehen werden.

In einem weiteren, nicht optionalen Verfahrensschritt S3 wird an dem Grundkörper 1 der Körperabschnitt 2 durch Fließpressen ausgebildet. Bei dem Fließpressen fließt Material unter Druck von dem Grundkörper 1 mit den Durchmesser D1 in den Körperabschnitt 2 mit den kleineren Durchmesser D2. Dadurch verringert sich die Länge L1 des Grundkörper auf eine Länge L11. Der ausgebildete Körperabschnitt hat eine Länge L12.

Für diese Kaltumformung wird der Grundkörper 1 mit dem abgefasten Ende 102 voran (sofern vorhanden) in eine zweite Matrize M2 eingesetzt, die ähnlich der ersten Matrize M1 ausgebildet ist (oder dieselbe Matrize M1 sein kann) und eine Durchgangsöffnung 110 mit einem ersten Durchmesser D1 und einem zweiten Durchmesser D2 und einen abgerundeten Übergang zwischen den ersten und zweiten Durchmesser D1, D2 aufweist, die der Übersichtlichkeit halber in Fig. 3 nicht bezeichnet sind. Der Grundkörper 1 wird in die Durchgangsöffnung 110 mit dem Durchmesser D1 eingesetzt und über einen Kopfstift 111 mit einer optionalen konturierten Kontaktfläche mit einer so hohen Pressraft in Richtung des zweiten Durchmessers D2 beaufschlagt, dass sich der Grundkörper 1 verformt und Material in die Durchgangsöffnung 110 mit dem kleineren Durchmesser D2 einfließt. Hierdurch bildet sich an den Grundkörper 1 der stiftförmige Körperabschnitt 2 aus. Nach dem Kaltumformen in der Matrize M2 wird der Grundkörper 1 mit dem einteilig verbundenen Körperabschnitt 2 durch einen Auswerfstift 112 aus der Matrize M2 ausgeworfen. Entsprechend der optionalen konturierten Kontaktfläche des Kopfstifts 111 weist auch der Grundkörper 1 an seinen dem Körperabschnitt 2 entgegensetzten Abschnitt eine konturierte Stirnfläche 113 auf, die in weiteren Verfahrensschritten vorteilhaft sein kann.

In einem weiteren Verfahrensschritt S4, S5 wird der Kragenabschnitt 3 ausgebildet. In dem hier dargestellten Ausführungsbeispiel erfolgt das Ausbilden des Kragenabschnitts 3 zweischrittig, um einen Kragenabschnitt mit besonders guten und reproduzierbaren Eigenschaften auszubilden. Die Erfindung ist hierauf jedoch nicht beschränkt, die Schritte S4 und S5 können auch in einem Verfahrensschritt zusammengefasst werden, insbesondere unter Verwendung einer Matrize ähnlich der nachfolgend noch beschriebenen Matrize M4.

Bei dem zweischrittigen Ausbilden des Kragenabschnitts 3 wird einem ersten Teilschritt S4 zunächst ein Vorkragen 3' ausgebildet, dessen radiale Ausdehnung kleiner und dessen axiale Ausdehnung größer ist als die entsprechenden Ausdehnungen des fertig ausbildeten Kragenabschnitts 3, wie ein Vergleich der Zwischenstufen zu den Verfahrensschritten S4 und S5 in Fig. 2 unmittelbar zeigt.

Das Ausbilden des Vorkragens 3' erfolgt in dem Verfahrensschritt S4 unter Verwendung einer Matrize M3 mit einer Durchgangsöffnung 120 mit einem dem Körperabschnitt 2 entsprechenden Durchmesser D2 (in Fig. 3 nicht eingezeichnet). An einer Stirnseite findet sich eine runde Vorkragenaussparung 121, die konzentrisch zu der Durchgangsöffnung 120 ausgebildet ist. Der Durchmesser der Vorkragenaussparung 121 entspricht in etwa dem Durchmesser des Vorkragens 3' und die Tiefe der Vorkragenaussparung 121 entspricht in etwa der axialen Ausdehnung des Vorkragens 3`. Die Zwischenstufe gemäß S3 in Fig. 2 mit dem Grundkörper 1 und dem Körperabschnitt 2 wird mit dem Körperabschnitt 2 in die Durchgangsöffnung 120 der Matrize M3 eingesteckt, bis der Grundkörper 1 in der Vorkragenaussparung 121 an der Stirnseite der Matrize M3 anliegt.

Der Grundkörper 1 wird in einer Kopfmacherform 122 aufgenommen, die zur Aufnahme des Grundkörpers 1 eine Durchgangsöffnung 123 mit einem dem Grundkörper entsprechendem Durchmesser D1 (in Fig. 3 nicht dargestellt) aufweist. An dem Grundkörper 1 anliegend ist in die Durchgangsöffnung 123 ein Kopfstift 124 aufgenommen, mit dem der Grundkörper 1 in Richtung der Matrize M3 gepresst werden kann. Aus später noch erläuterten Gründen ist der Kopfstift 124 zweiteilig aufgebaut mit einer hohlzylinderförmigen Kopfstifthülse 124a und einem in der Kopfstifthülse 124a geführten, stiftförmigen Kopfstifteinsatz 124b. Die Kopfstifthülse 124a und der Kopfstifteinsatz 124b sind zum Erzeugen einer Presskraft gemeinsam oder jeweils einzeln in der Durchgangsöffnung 123 bewegbar. Auch die Kopfmacherform 122 ist in Axialrichtung relativ zu der Matrize M3 bewegbar, zusammen oder unabhängig von dem Kopfstift 124.

Im Verfahrensschritt S4 zur Ausbildung des Vorkragens 3 wird die Kopfmacherform 122 auf der oder in einem kleinen Spalt beabstandet von der Stirnfläche der Matrize M3 mit der Vorkragenaussparung 121 angeordnet. Der Kopfstift 124 (Kopfstifthülse 124a und Kopfstifteinsatz 124b zusammen) presst auf den Grundkörper 1. Dadurch fließt Material des Grundkörpers 1 quer zur Axialrichtung (Querfließen) in die Vorkragenaussparung 121. Aufgrund der Dicke des Vorkragens 3' ist der Fließwiderstand in die Vorkragenaussparung 121 kleiner als der Fließwiderstand in die Durchgangsöffnung 120 der Matrize M3. Daher bleibt die Länge L12 des Körperabschnitts 2 in dem Verfahrensschritt S4 im Wesentlichen unverändert. Durch das Querfließen von Material aus dem Grundkörper 1 in den Vorkragen 3' verringert sich die Länge des Grundkörpers 1 von der Länge L11 auf die Länge L13 (vgl. S4, Fig. 2). Durch einen Auswerfstift 125 wird der Körperabschnitt 2 aus der Matrize M4 ausgeworfen.

In einem weiteren Verfahrensschritt S5 wird der Vorkragen 3' in den Kragenabschnitt 3 weitergebildet. Dabei werden der Grundkörper 1 und der Körperabschnitt 2 einschließlich deren Längen L13 und L12 nicht geändert (vgl. S5, Fig. 2). Das Umformen des Vorkragens 3' erfolgt mit einer Matrize M4, die der Matrize M3 bis auf die Vorkragenaussparung 121 gleicht. Auf eine erneute Beschreibung wird verzichtet. Anstelle der Vorkragenaussparung 121 weist die Matrize M4 eine konzentrisch mit der Durchgangsöffnung 130 angeordnete Kragenaussparung 131 auf, deren Durchmesser relativ genau dem Durchmesser des Kragenabschnitts 3 entspricht und deren Tiefe der axialen Ausdehnung des Kragenabschnitts 3 entspricht. In die Kragenaussparung 131 ragt ein die Durchgangsöffnung 130 umgehender (optionaler) Wulst 132 hinein, durch den in dem Kragenabschnitt 3 eine (optionale) Ringspaltnut 7 ausgebildet wird (vgl. Fig. 1 und 2), die zwischen dem Kragenabschnitt 3 und dem Körperabschnitt 2 angeordnet ist.

Zum Ausbilden des Kragenabschnitts 3 wird der Köperabschnitt 2 in die Matrize M4 eingesetzt, bis der gemäß Verfahrensschritt S4 ausgebildete Vorkragen 3' in der Kragenaussparung 131 aufliegt. Die Kopfmacherform 122 aus dem Verfahrensschritt S4, die dort bereits beschrieben wurde, wird auf den Grundkörper 1 aufgesetzt. Die Kopfmacherform 122 wird gemeinsam mit den Kopfstift 124 gegen die Matrize M4 gedrückt. Dabei wird der Vorkragen 3' n die Kragenaussparung 131 gepresst und der Kragenabschnitt 3 mit der Ringspaltnut 7 ausgebildet. Längenänderungen des Grundkörpers 1 und des Körperabschnitts 2 sind marginal und können vernachlässigt werden. Sie sind daher in Fig. 2 nicht einzeichnet. Nach dem Ausbilden des Kragenabschnitts 3 wird der Körperabschnitt 2 durch einen Auswerfstift 133 ausgeworfen.

In einem weiteren, in dieser Ausführungsform als letztem dargestellten Verfahrensschritt S6 wird aus dem verbleibenden Grundkörper 1 der Kopfabschnitt 4 ausgebildet, der über den Übergangsbereich 6 mit dem Körperabschnitt 2 verbunden ist. Dabei verlängert sich der Körperabschnitt 2 auf eine Länge L14, der Kopfabschnitt 4 hat eine Länge L15. Die axiale Ausdehnung des Übergangsbereichs 6 und des Kragenabschnitts 3 sind klein gegenüber den Längen des Kopfabschnitts und des Körperabschnitts und können funktional im Wesentlichen vernachlässigt werden. Diese sind daher in Fig. 2 nicht gesondert gekennzeichnet.

In dem Verfahrensschritt S6 wird, wie in Fig. 3 schematisch gezeigt, der nach dem Verfahrensschritt S4 bzw. S5 verbleibende Grundkörper 1 über eine feststehende Fließhülse 140 mittels der auch in den Verfahrensschritten S4 und S5 verwendeten Kopfmacherform 122 tiefgezogen, indem die Kopfmacherform 122 auf den verbleibenden Grundkörper 1 gemäß S4 oder S5 (vgl. Fig. 2) aufgesetzt wird und der Körperabschnitt 2 in die Fließhülse 140 eingesteckt wird. Anschließend wird die Kopfmacherform 122 zusammen mit dem Kopfstift 124 über die Fließhülse 140 gepresst bzw. gezogen (auch als Tiefziehen oder Tieffließen bezeichnet). Dabei fließt Material aus dem Grundkörper 1 zum einem in die Fließhülse 140 und verlängert den Körperabschnitt 2. Zum anderen fließt Material aus dem Grundkörper 1 in den Zwischenraum zwischen Außenumfang der Fließhülse 140 und der Konturfläche (Innenumfangsfläche der Durchgangsöffnung 123) der Kopfmacherform 122 und bildet dabei den hülsenförmigen Kopfabschnitt 4 aus.

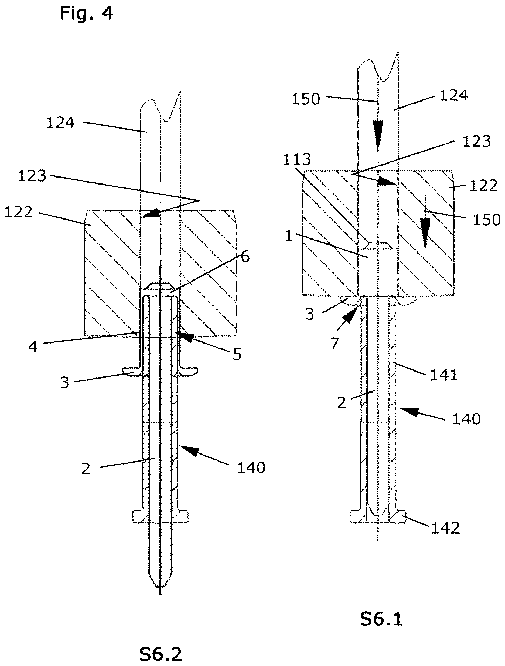

Diese gemäß einem wichtigen Aspekt des erfindungsgemäß vorgeschlagenen Verfahrens erfolgende Ausbildung wird mit Bezug auf Fig. 4 genauer beschrieben, die Verfahrensschrittzustände S6.1 und S6.2 in einer vergrößerten Darstellung zeigt.

Zustand S6.1 zeigt den Beginn des Verfahrensschritts S6. Der Körperabschnitt 2 des gemäß Verfahrensschritt S5 umgeformten Grundkörpers 1 ist in ein Ende eines Hohlzylinders 141 der feststehende Fließhülse 140 eingesteckt, das dem anderen Ende mit einem Sockelabschnitt 142 der Fließhülse gegenüberliegt. Der Außendurchmesser des Sockelabschnitts 142 ist größer als der Außendurchmesser des Hohlzylinders 141. Die dem Sockelabschnitt 142 gegenüberliegende Stirnseite des Hohlzylinders 141 liegt in der Ringspaltnut 7 an dem Grundkörper 1 an. Der Außendurchmesser des Hohlzylinders 141 ist kleiner als der Durchmesser D1 der Grundform 1. Der Durchmesser D1 der Grundform entspricht etwa dem Durchmesser der Öffnung 123 der Kopfmacherform 122 (Konturfläche).

Auf einer dem Körperabschnitt 2 abgewandten Seite des Kragenabschnitts 3 liegt eine Stirnseite der Kopfmacherform 122 an dem Kragenabschnitt 3 an. Der Grundkörper 1 ist die Durchgangsöffnung 123 der Kopfmacherform aufgenommen. Auf der hier (optional) konturiert dargestellten Stirnfläche liegt der auch in der Durchgangsöffnung 123 geführte Kopfstift 124 auf.

Zum Ausbilden des hülsenförmigen Kopfabschnitts 4 werden die Kopfmacherform 122 und der Kopfstift 124 axial in der Ziehrichtung 150 gegen die festsehende Fließhülse 140 gezogen. Dabei drückt sich die Fließhülse 140 in den Grundkörper 1. Material des Grundkörpers 1 fließt in den Hohlzylinder 141 der Fließhülse 140 und verlängert den Köperabtschnitt 2. Gleichzeitig fließt Material des Grundkörpers 1 in den Spalt zwischen der Außenwand des Hohlzylinders 141 und die Innenoberfläche der Durchgangsöffnung 123, die auch als Konturöffnung oder Konturfläche bezeichnet wird, weil sie die Außenkontur des dabei entstehenden Kopfabschnitts 4 definiert. Die Differenz zwischen dem Außendurchmesser der Fließhülse 140 respektive des Hohlzylinders 141 und dem Innendurchmesser der Durchgangsöffnung 123 der Kopfmacherform 122 bestimmten die Wandstärke des Kopfabschnitts 4. Typisch sind Maße, die sich an gängigen Blindnietabmessungen bzw. -normen orientieren. Die Länge des Kopfabschnitts 4 richtet sich nach dem erforderlichen Klemmbereich und wird je nach Anwendung, aber bevorzugt für kleinere bzw. - bezogen auf die Anwendung - kleinstmögliche Klemmbereiche, ausgelegt.

Zustand S6.2 zeigt eine Endstellung der Kopfmacherform 122 beim Ausbilden des Kopfabschnitts 4 relativ zu der feststehenden Fließhülse 140. Die Fließhülse 140 ist in den Grundkörper 1 so weit eingeführt, dass der Grundkörper 1 den Übergangsbereich 6 ausbildet, in dem der Körperabschnitt 2 mit dem Kopfabschnitt 4 einteilig verbunden ist. Während des Ausformens des Kopfabschnitts 4 ist Material des Grundkörpers 1 durch das Ziehen der Kopfmacherform in den Spalt zwischen den Außenumfang der Fließhülse 140 und die Konturfläche der Durchgangsöffnung 103 eingeflossen. Dabei wurde aus dem Grundkörper 1 der hülsenförmige Kopfabschnitt 4 durch Tiefziehen ausgebildet. Bei einem typischen Prozess des Tiefziehen fließt ein an den Kragenabschnitt 3 anschließender Bereich des Kopfabschnitts 4 aus der Durchgangsöffnung 123 heraus und steht über die Stirnfläche der Kopfmacherform 122 vor. Weil die Formung des Kopfabschnitts 4 unter dem Druck des Kopfstifts 124 in der Kopfmacherform 122 erfolgt, ändert sich die Form des Kopfabschnitts bei dem Ausfließen aus der Kopfmacherform 122 nicht mehr. Bei dem Tiefziehen verlängert sich durch das Einfließen von Material in die Fließhülse 140 auch der Körperabschnitt 2, der in dem Zustand S6.2 von Fig, 4 seine endgültige Länge erhält. Die Ausbilden der Grundform des Blindniets 51 (Befestigungs- und Verbindungsmittel) ist mit diesem Verfahrensschritt S6 des Tiefziehens abgeschlossen. Zwischen dem hülsenförmig ausgebildeten Kopfabschnitt 4 und dem Grundkörper 2 ist durch die Fließhülse 140 der Ringspalt 5 ausgebildet. In Fig. 4, Zustand S6.2, ist die Fließhülse 140 noch in dem Ringspalt 5 eingeführt.

Nach dem in Fig. 4 dargestellten Zustand S6.2 wird die Kopfmacherform 122 entgegen der Ziehrichtung 150 zurückbewegt, bis der Kopfabschnitt 4 und der Übergangsbereich 6 aus der Durchgangsöffnung 123 der Kopfmacherform 112 austreten und freiliegen.

In Fig. 3 ist der Zustand S6.2 aus Fig. 4 als Verfahrensschritt 6 dargestellt. Die Fließhülse 140 ist in einer Matrize M5 festgelegt. Dazu weist die Matrize M5 eine Durchgangsöffnung 149 mit zwei verschiedenen Durchmessern in ihrer Axialrichtung auf. In einem der Kopfmacherform 122 zugewandten Abschnitt der Durchgangsöffnung 149 weist diese einen kleineren Durchmesser auf, der dem Außendurchmesser des Hohlzylinders 141 der Fließhülse 140 entspricht. In einem der Kopfmacherform 2 abgewandten Abschnitt der Durchgangsöffnung 149 weist diese einen größeren Durchmesser auf, der dem Außendurchmesser eines Sockelabschnitts 142 der Fließhülse 140 entspricht. Die Fließhülse 140 ist in die Durchgangsöffnung 149 der Matrize M5 eingesteckt, bis der Sockelabschnitt 142 an einem Absatz der Durchgangsöffnung 149 beim Übergang zwischen den verschiedenen Durchmessern anliegt. Ein Teil des Hohlzylinders 141 der Fließhülse 140 ist in dem Teil der Durchgangsöffnung 149 mit dem kleineren Durchmesser geführt. Ein anderer Teil des Hohlzylinders 141 der Fließhülse 140 ragt aus der Durchgangsöffnung 149 der Matrize M5 heraus, so dass das Tiefziehen der Kopfmacherform 122 über die Fließhülse 140 über diesen aus der Matrize M5 herausstehenden Teil des Hohlzylinders 141 der Fließhülse 140 erfolgt.

Zum Arretieren und Widerhalten der Fließhülse 140 in der Matrize M5 ist eine Abstützhohlringhülse 148 vorgesehen, die den Sockelabschnitt 142 der Fließhülse 140 gegen Absatz der Durchgangsöffnung 149 drückt und dort fixiert. Der Außendurchmesser der Abstützhohlringhülse 148 entspricht dem größeren Durchmesser der Durchgangsöffnung 149. Der Innendurchmesser der Abstützhohlringhülse 148 entspricht dem Inndurchmesser des Hohlzylinders 141 und damit dem Durchmesser des Körperabschnitts 2.

Von dem der Kopfmacherform 122 entgegengesetzten Ende der Durchgangsöffnung 149 ist in der Abstützringhülse 148 ein Auswerfstift 147 geführt, der gegen das freie (distale) Ende des Körperabschnitts 2 anstößt, um den Köperabschnitt nach den Verfahrensschritt S6 aus der Fließhülse 140 auszuwerfen. Es ist erfindungsgemäß auch möglich, durch eine Kontur der Oberfläche des Auswerfstifts 147 und das Erzeugen eines Gegendrucks durch den Auswertstift die Form des Körperabschnitts 2 an dem freien (distalen) Ende zu formen und/oder das weitere Längen des Körperabschnitts 2 während des Tiefziehens einzustellen. Je höher der Gegendruck ist, desto weniger Material fließt in die Fließhülse ein und desto kürzer bleibt der Körperschnitt 2 während des Ausbildens des hülsenförmigen Kopfabschnitts 4.

Der Verfahrensabschnitt S6 stellt einen erfindungsgemäß besonders bevorzugten Verfahrensschritt dar. Dieser kann auch unabhängig von den anderen Verfahrensschritten S1 bis S5 ausgeführt werden und stellt einen erfindungsgemäß eigenständigen Verfahrensschritt dar, auch wenn die zuvor beschriebenen Verfahrensschritte auf andere Weise oder gar nicht ausgeführt werden, bspw. weil ein entsprechendes Vorprodukt eingesetzt wird.

Auch die Reihenfolge der Verfahrensschritte S1 bis S6 kann variieren. Gemäß einer weiteren bevorzugten Ausführungsform kann der Verfahrensschritt S6 vor dem Verfahrensschritt S5 durchgeführt werden. In diesem Fall wird der hülsenförmige Kopfabschnitt 4 ausgebildet, bevor der Vorkragen 3' in die die endgültige Form des Kragenabschnitts 3 gebracht wird. Matrizen M4, M5 und Kopfmacherform 122 können in gleicher Weise genutzt werden. Weil in dieser Variante der Kopfabschnitt 4 und der Übergangsbereich 6 schon fertig ausgeformt sind (Verfahrensschritt S6), bevor der Kragenabschnitt 3 in seine Endform gebracht wird, kann in dem Verfahrensschritt S5 vorzugsweise nur die Kopfmacherform 122 mit einer Druckkraft zum Verpressen des Vorkragens 3' in der Kragenaussparung 131 der Matrize M4 gedrückt. Der Kopfstift 124 kann entweder weggelassen oder nicht mit einer Druckkraft beaufschlagt werden.

Eine Fließhülse 140, die erfindungsgemäß bei dem Verfahrensschritt zum Ausbilden des Kopfabschnitts 2 verwendet werden kann, ist in Fig. 5 darstellt mit verschiedenen erfindungsgemäßen Varianten in der Form der freien Stirnseite 143, über die der Grundkörper 1 tiefgezogen wird. In der Variante A ist die Stirnseite 143 bauchförmig zu der Innenwandfläche und der Außenwandfläche des Hohlzylinders 141 abgerundet. Durch das bauchförmige Ausführen, bspw. als Radius R, im Sinne einer (insbesondere radial gerichteten) Materialaufdickung an der Stirnseite 43 entsteht eine abgerundete Fließkante, die Reibungseffekte beim Fließen verringert. Der Mittelpunkt des Radius R liegt vorzugsweise in der Wand des Hohlzylinders 141, nicht tangential an deren Oberfläche. Eine Fließkante an der Innenseite und der Außenseite des Hohlzylinders fördert also das Fließverhalten um den Hohlzylinder herum und in den Hohlzylinder hinein. Kontakt entlang der gesamten axialen Ausdehnung der Fließhülse wird verhindert oder reduziert. Dies ist eine besonders bevorzugte Ausführungsform.

Anstelle einer Ausbildung der Fließkante ausschließlich als Radius kann die Fließkante, zwischen ggf. einer Abrundung an den jeweiligen Enden, einen zylindrisch ausgebildeten Abschnitt aufweisen.

In der Variante B ist nur die Stirnseite 143 zu der Außenwandfläche des Hohlzylinders 141 bauchförmig abgerundet, d.h. nur dort eine Fließkante ausgebildet. Damit wird eine Schwächung der Fließhülse vermieden, weil die Breite des Ringspalts 5 durch den Abstand der Fließkanten bestimmt wird und der Holzylinder 141 in der Wandstärke entsprechend reduziert werden muss. Bei radial vorstehenden Fließkanten an der Innen- uns Außenseite des Hohlzylinders 141 führt dies also zu einer stärken Schwächung in der Wandstärke des Hohlzylinders141, die es ggf. zu vermeiden gilt, zumindest wenn die Stabilität des Hohlzylinders der Fließhülse 140 insgesamt gefährdet ist.

Es kann gewünscht sein, dass nach dem Setzen eines der Blindniete 51 bis 55, respektive der Befestigungs- oder Verbindungsmittel, der Körperabschnitt 2, der aus dem Kopfabschnitt 4 herausragt, entfernt wird. Zum Setzen des Blindniets wird in der Regel ein (nicht dargestelltes) Setzwerkzeug verwendet, das nach dem Einsetzen des Blindniets 55 in eine Öffnung 201 (vgl. Fig. 7) eines Befestigungs- oder Fügeguts 200 an dem Körperabschnitt 2 (Nietdorn) angreift und gegen eine Abstützung an dem Kragenabschnitt 3 (Setzkopf) eine Setzkraft auf den Nietdorn 2 ausübt, wobei der Übergangsbereich 6 unter Ausbildung eines Schließkopfs 8 aus dem Kopfabschnitt 4 in Richtung des Setzkopfs 3 gezogen wird. Die dem Übergangsbereich 6 zugewandte Seite des Setzkopfs 3 liegt an dem Befestigungs- oder Fügegut 200 an. Durch den Zug an dem Nietdorn 2 verformt sich der Kopfbereich 4 (Umformbereich) und bildet den Schließkopf 8 aus, wobei das Befestigungs- oder Fügegut 200 zwischen dem Setzkopf 3 und dem Schließkopf 8 eingeklemmt ist.

Nach dem Setzen des Blindniets 51 hat der Körperabschnitt 2 (Nietdorn) keine Funktion mehr und kann entfernt werden. Hierzu kann an dem Körperabschnitt 2, was auch den Übergangsbereich 6 mit umfasst, eine Sollbruchstelle ausgebildet werden, an der der Körperabschnitt 2 bei weiterer Kraftbeaufschlagung von dem gesetzten restlichen Bereich des Blindniets 51, 52, 53, 54, 55 getrennt wird. Hierfür gibt es erfindungsgemäß verschiedene Möglichkeiten, die nachfolgend anhand der Fig. 6 bis 9 beschrieben werden.

In den Fig. (a) bis (c) der Fig. 6 sind Möglichkeiten zum Ausbilden einer Sollbruchstelle in einer Stirnseite 9 des Übergangsbereichs 6 dargestellt, die optional durch die bzw. in der konturierte(n) Stirnfläche 113 gebildet sein kann. Die gemäß den verschiedenen Möglichkeiten a, b, c dargestellten Blindniete 52, 53 und 54 (synonym für Befestigungs- oder Verbindungsmittel) unterscheiden sich durch auf verschiedene Weise ausgebildete Sollbruchstellen 32, 33 und 34 in dem Übergangsbereich 6 der Blindniete zwischen dem Körperabschnitt 2 und dem Kopfabschnitt 4. Die übrigen Merkmale sind identisch zu dem Blindniet 51 wie zuvor beschrieben und mit denselben Bezugszeichen versehen. Das Ausbilden von Sollbruchstellen 32, 33, 34, 41 (Fig. 6 bis 9) ist ein optionales Merkmal.

Auch ein Blindniet gemäß Fig. 1 kann im Übergangsbereich brechen und dieser Bereich kann eine Sollbruchstelle darstellen, wenn die Geometrien und Wandstärken entsprechend ausgelegt sind und in Wechselwirkung mit der plastischen Verformung bei der Schließkopfbildung und der Setzkraft interagieren.

Den in Fig. 6 gezeigten Sollbruchstellen 32, 33, 34 ist das Merkmal gemeinsam, dass sie jeweils eine Vertiefung in dem Übergangsbereich 6 ausbilden, durch die eine verbleibende Materialstärke 31 zwischen dem Kopfabschnitt 4 und dem Köperabschnitt 2 im Bereich um den Ringspalt 5 reduziert wird. Bei einer weiteren Kraftbeaufschlagung des Körperabschnitts 2 nach dem Setzen reißt der Bereich mit der reduzierten Materialstärke 31 und der Körperabschnitt 2 wird von dem gesetzten Blindniet 52, 53, 54 an der Sollbruchstelle abgetrennt.

In Variante a wird als Sollbruchstelle an der Stirnseite 9 (auch als Stirnfläche bezeichnet) eine Vertiefung 32 als in der Mitte einer Stirnfläche angeordnete Stirnflächen-Ausnehmung einbracht, die in Axialrichtung vorzugsweise zumindest minimal mit dem Ringspalt 5 überlappt. Dies kann bspw. während des Verfahrensschritts S4, S5 und/oder S6 erfolgen, indem der Kopfstifteinsatz 124b des in der Kopfmacherform 122 geführten Kopfstifts 124 tiefer in den Übergangsbereich 6 respektive Grundkörper 1 eingedrückt wird als die den Kopfstifteinsatz 124b umgebende hohlzylinderförmige Kopfstifthülse 124a. Unter der Schnittdarstellung der Variante a ist eine Aufsicht auf die Stirnseite 9 mit der zentralen Vertiefung 32 dargestellt. Die Wandstärke des Kopfabschnitts 4 ist gepunktet eingezeichnet. Alternativ zu dem in der Variante a dargestellten Beispiel kann die Stirnflächen-Ausnehmung 32 einen größeren Radius aufweisen, der in Radialrichtung in den Bereich des Ringspalts 5 hinreicht, axial dazu aber versetzt ist. Die axiale Versetzung wird erreicht, indem die Tiefe des der axialen Ausnehmung verringert wird, so dass diese nicht bis in den Ringspalt 5 hineinreicht.

In Variante b wird als Sollbruchstelle an der Stirnseite 9 eine Vertiefung 33 als zu der Mittelachse 70 konzentrische Stirnflächen-Nut eingebracht, die radial mit dem Ringspalt 5 fluchtet und axial beabstandet dazu ausgebildet ist. Dies kann bspw. während des Verfahrensschritts S4, S5 und/oder S6 erfolgen, indem die hohlzylinderförmige Kopfstifthülse 124a des in der Kopfmacherform 122 geführten Kopfstifts 124 tiefer in den Übergangsbereich 6 respektive Grundkörper 1 eingedrückt wird als der Kopfstifteinsatz 124b. An der Kopfstifthülse 124a kann ein der Form der Vertiefung 33 ausgebildeter Wulst vorgesehen sein.

In Variante c werden als Sollbruchstelle an der Stirnseite 9 Vertiefungen 34 als zu der Mittelachse 70 konzentrische Stirnflächen-Nut vorgesehen, die ähnlich der als Ringnut ausgebildeten Vertiefung 33 mit dem Ringspalt 5 radial fluchten (Variante b). Die Ringnut ist aber abschnittsweise durch Querstreben 35 zwischen den Vertiefungen 34 segmentiert, wobei die Vertiefungen 34 zwischen den Querstreben 35 als Durchgangsöffnungen ausgebildet sind, die in den Ringspalt 5 hindurchreichen. Dadurch bildet die als Vertiefungen 34 ausgebildete Sollbruchstelle eine Perforierung in dem Übergangsbereich 6 aus. Unter der Schnittdarstellung der Variante c ist eine Aufsicht auf die Stirnseite 9 mit den als Durchgangsöffnungen ausgebildeten Vertiefungen 34 dargestellt, zwischen denen jeweils segmentweise Querstreben 35 verlaufen, die gleichzeitig die verbleibende Materialstärke 31 bilden. Die Schnittdarstellung erfolgt im rechten Winkel entlang den durch Pfeilen gekennzeichneten Strichen der Aufsicht, einmal durch eine Querstrebe 35 und einmal durch eine Vertiefung 34. Das Ausbilden dieser Perforierung kann vorzugsweise in dem Verfahrensschritt S6 erfolgen, indem die Kopfstifthülse 24a den Vertiefungen 34 entsprechende Vorsprünge aufweist und die Kopfstifthülse 24a nach dem Tiefziehen so weit in den Grundkörper 1 respektive ausgebildeten Übergangsbereich 6 gepresst wird, bis die Vorsprünge an der Stirnseite der Fließhülse 140 anliegen.

In allen drei Varianten a, b, c gemäß Fig. 6 sind die Konturen der Kontaktfläche von hohlzylinderförmiger Kopfstifthülse 124a und darin geführtem Kopfstifteinsatz derart ausgebildet, dass die Stirnseite 9 mit den Vertiefungen 32, 33, 34 in der gewünschten Weise ausgeformt werden.

Nach dem Trennen des Körperabschnitts 2 eines gesetzten Blindniets 52, 53, 54 ist der gesetzte Blindniet 52, 53, 54 innerhalb des Kopfbereichs offen, weil der Körperabschnitt 2 an den Vertiefungen ausbricht und eine Öffnung in dem Übergangsbereich 6 hinterlässt. In diesen Ausführungsformen ist der gesetzte Blindniet 52, 53, 54 entsprechend besonders leicht, weil der Körperabschnitt 2 nach dem Setzen des Blindniets 52, 53, 54 zusammen mit dem an dem proximalen Ende des Körperabschnitts 2 vorhandenen Material des Übergangsbereichs 6 von dem Blindniet 52, 53, 54 getrennt wird.

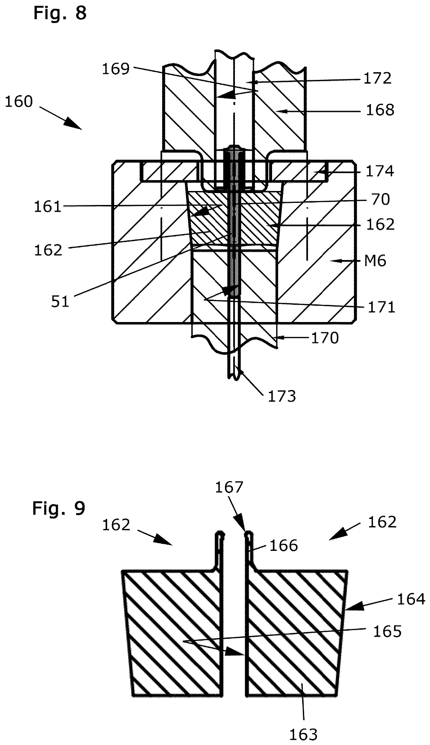

In den Fig. 7 und 8 wird eine weitere Ausführungsform zum Ausbilden einer Sollbruchstelle 41 an dem Körperabschnitt 2 beschrieben, bei der der gesetzte Blindniet 55 im Übergangsbereich nach dem Entfernen des Körperabschnitts 2 geschlossen bleibt. Hierdurch wird eine abgedichtete, insbesondere wasserdichte, Nietverbindung realisiert.

In dieser Ausführungsform ist der Blindniet 55 mit einer Köper-Einkerbung 41 als Sollbruchstelle in dem Körperabschnitt 2 ausgebildet. Die Einkerbung 41 ist von einer Mantelfläche des Körperabschnitts 2 in radialer Innenrichtung, d.h. in Richtung der Mittelachse 70, gerichtet. Sie bildet eine Schwächung des Körperabschnitts 2. Wenn nach dem Setzen des Blindniets 55 und Ausbilden des Schließkopfs 8 (rechte Seite der Fig. 7) weiter Kraft auf den Körperabschnitt 2 (Nietdorn) ausgeübt wird, bricht dieser im Bereich der Körper-Einkerbung 41 (Sollbruchstelle) ab und bildet dort die Abbruchstelle 42 aus. Bei gesetztem Blindniet 55 ist das Befestigungs- oder Fügegut 200 zwischen dem Setzkopf 3 und dem Schließkopf 8 eingeklemmt.

Bei dem auf der linken Seite des in der Fig. 7 dargestellten nicht-gesetzten Blindniet ist die Körper-Einkerbung 41 an einer axialen Position des Körperabschnitts angeordnet, die axial um mindestens die Länge des Setzwegs 202 in Richtung des proximalen Endes des Körperabschnitts 2 versetzt, d.h. in Richtung des Übergangsbereichs 6, der am proximalen Ende des Körperabschnitts 2 liegt. Wie der Vergleich der linken und der rechten Darstellung von Fig. 7 veranschaulicht, liegen die Sollbruchstelle an der Einkerbung 41 und die tatsächliche Abbruchstelle 42 innerhalb der Blindniets 55, d.h. einem axialen Bereich entlang Mittelachse 70, der von dem Kopfabschnitt 4 (in dem auch der Schließkopf 8 ausgebildet ist) oder zumindest den Kragenabschnitt 3 (Setzkopf) überdeckt ist. Damit steht der verbleibenden Rest des Körperabschnitts nach dem Abbrechen sicher auch nicht aus dem gesetzten Blindniet 55 vor.

Einfach gesagt ist der Setzweg 202 die axiale Länge, um die sich der Blindniet 55 beim Setzen verkürzt. Der Setzweg ergibt sich also aus der Differenz der axialen Länge des Kopfabschnitts 4 zwischen nicht-gesetztem Befestigungsmittel und gesetztem Befestigungsmittel. Die Länge des Kopfabschnitts kann einfacher Weise definiert sein durch den Abstand zwischen dem stirnseitigen Ende des Übergangsbereichs 6 (proximales Ende des Kopfabschnitts 4) auf der einen Seite und dem stirnseitigen Ende des Kragenabschnitts 3 (distales Ende des Kopfabschnitts) auf der anderen Seite, wie durch die obere und die jeweils untere gestrichelte Line des nicht-gesetzen und des gesetzten Blindniets 55. Die Differenz aus der Länge 203 des nicht-gesetzten Blindniets 55 (in der Darstellung der Fig. 7 links) und der 204 Länge des gesetzten Blindniets 55 (in der Darstellung der Fig. 7 rechts) ergibt also gerade den Setzweg 202.

Die Körper-Einkerbung 41 kann an der gewünschten axialen Position innerhalb des durch den hülsenförmigen Kopfabschnitt 4 abgedeckten Bereichs des Körpereinschnitts erzeugt werden, bevor der Kopfabschnitt 4 in dem Verfahrensschritt S6 durch Tiefziehen ausgebildet wird. Dazu kann der Körperabschnitt 2 in mindestens zwei radial aufeinander zu bewegbare Backen eingespannt werden, die eine radial vorstehende Kontur aufweisen, die die Körper-Einkerbung 41 in den Körperabschnitt einpressen, wenn die Backen aufeinander zu bewegt werden. Beispielsweise können die Backen mindestens zwei gradlinige Einkerbungen von (jeweils) zwei vorzugsweise einander gegenüberliegenden Seiten in den Körperabschnitt einpressen. Die Backen und die Kontur auf den Backen können auch so geformt sein, dass die Körper-Einkerbung 41 als Einkerbungs-Ringnut ausgebildet ist. Weitere Formen der Körper-Einkerbung und Möglichkeiten zu deren Ausbilden liegen im Griffbereich des Fachmanns.

Entscheidend für diese Variante ist, dass der axiale Bereich des Körperabschnitts 2, in dem die Einkerbung 41 eingebracht wird, während des Ausbildens des Kopfabschnitts 4 durch den hülsenförmigen Kopfbereich 4 so weit überflossen wird, dass die Einkerbung 41 wie beschrieben mindestens um den Setzweg 202 in dem Überlappungsbereich zurückgesetzt ist. Dies kann, wie bereits beschrieben, während des Verfahrensschritt S6 durch einen Gegendruck auf den Auswerfstift 147 gesteuert werden, der das Einfließen von Material in den Hohlzylinder 141 und damit die Verlängerung des Körperabschnitts 2 während des Tiefziehens steuern kann.

Eine alternative Möglichkeit gemäß einer erfindungsgemäßen Ausführungsform, um die Körper-Einkerbung 41 nach dem Ausbilden des Blindniets 51 (ohne Sollbruchstelle) in den Körperabschnitt 2 einzubringen, wird nachstehend anhand der Fig. 8 und 9 beschrieben. Dazu ist ein Matrizenwerkzeug 160 mit einer Matrize M6 mit einer abschnittsweise kegelförmigen Durchgangsöffnung 161 zum Führen von mindestens zwei Backen 162 vorgesehen, zwischen denen der Blindniet 51 nach Durchführen des Verfahrensschritts S6 eingelegt ist, also ein aus dem Grundkörper 1 in der Grundform fertig ausgebildetes Befestigungs- oder Verbindungmittel.

Die Backen 162 des Matrizenwerkzeugs 160 sind vergrößert in Fig. 9 dargestellt. Die Backen 162 weisen einen Backenkörper 163 mit einer konischen Seitenfläche 164 zur Anlage an der kegelförmigen Durchgangsöffnung 162 und einer axial gerichteten Seitenfläche 165 zur Anlage an den Körperabschnitt 2 des Blindniets 51 auf. An der axial gerichteten Seitenfläche 165 sind in Axialrichtung von dem Backenkörper 163 vorstehend Stege 166 ausbildet. Diese Stege 166 sind so dimensioniert, dass sie in Axialrichtung durch die offene Seite des Kopfabschnitts 4 in den Ringspalt 5 des Blindniets 51 aufgenommen werden können. An dem freien Ende des Stegs 166 ist eine wulstartige Kontur 167 vorgesehen, die radial von dem Backenkörper 163 weg gerichtet ist, also in den Bereich vorsteht, in dem der Körperabschnitt 2 des Blindniets 51 angeordnet ist. Durch Zusammendrücken der Backen 162 in radialer Innenrichtung des Matrizenwerkezeug, d.h. auf die Mittelachse 70 zu, pressen sich die wulstartigen Konturen 167 in den Körperabschnitt 2 des Blindniet ein und erzeugen die Körper-Einkerbung 41 als Sollbruchstelle in dem Körperabschnitt 2. Die Stege 166 sind an der Stirnseite des Backenkörpers 163 mit dem größeren Durchmesser ausgebildet.

Die radiale Innenbewegung der Backen 162 wird in dem Matrizenwerkzeug unter Verwendung einer zweiten Kopfmacherform 168 erreicht, die die Backen 162 in Axialrichtung in die sich kegelförmig bzw. konisch verjüngende Durchgangsöffnung 161 eindrückt. Dazu ist in der zweiten Kopfmacherform 168 eine axiale Durchgangsöffnung 169 ausgebildet, deren Durchmesser dem Außendurchmesser des Kragenabschnitts 3 des Blindniets entspricht. Auf der der zweiten Kopfmacherform 168 entgegengesetzten Seite ist in die Durchgangsöffnung 161 der Matrize M6 ein Druckstück 170 mit einer axialen Aufnahmeöffnung 171 zur Aufnahme und Führung des freien distalen Endes des Körperabschnitts vorgesehen. Das Druckstück 170 drückt die Backen 162 mit Federkraft in axialer Richtung auf die zweite Kopfmacherform 168 zu und damit so weit auseinander, dass der Körperschnitt 2 zwischen den Backen 162 aufgenommen oder entnommen werden kann, wenn die Backen nicht durch die zweite Kopfmacherform 168 in die konisch zulaufende Durchgangsöffnung 161 der Matrizen eingedrückt werden.

In einem Verfahrensschritt zum Ausbilden der Köper-Einprägung 41 wird ein Blindniet 51 mit dem Körperabschnitt 2 in die Aufnahmeöffnung 171 eingeführt und zwischen den auseinandergedrückten Backen 162 positioniert, wobei die Stege 166 der Backen 162 in den Ringspalt 5 Blindniets 51 eingeführt sind. Der Kragenabschnitt 3, Kopfabschnitt 4 und Übergangsbereich 6 des Blindniets sind in die Durchgangsöffnung 169 der zweiten Kopfmacherform 168 aufgenommen, wobei an der Stirnseite des Übergangsbereichs 6 ein Kopfstift 172 in der Durchgangsöffnung 169 anliegt. Anschließend werden die zweite Kopfmacherform 168 und die Kopfstift 172 gegen die Backen 162 gedrückt, um die Körper-Einkerbung 41 zu erzeugen. Nach dem Prägeschritt wird der Blindniet 55 mit der Körper-Einkerbung 41 mittels eines Auswerfstifts 173 aus dem Matrizenwerkzeug 160 ausgeworden.

Dieses Matrizenwerkzeug 160 ermöglicht das Einbringen der Körper-Einkerbung 41 in dem Ringspalt nach dem Ausbilden eines erfindungsgemäßen einteiligen Blindniets. Die Backen 162 in der Matrize M6 können durch einen Deckel 174 abgedeckt sein. Der Deckel 174 weist eine Öffnung auf, durch die ein Kopfmachervorsprung 175 auf die Backen 162 drückt.

Eine weitere Möglichkeit zum Einbringen der Körper-Einkerbung 41 in den Körperabschnitt 2 ist eine Einschnürung. Dies ist eine Einkerbung, bei der durch Ziehen am freien Ende des Körperabschnitts 2 vor oder nach dem Ausbilden des Kopfabschnitts 4 und/oder an dem zylindrischen Grundkörper 1 in einem Zwischenschritt während des Herstellungsprozess und/oder nach dem Herstellungsprozess erzeugt wird. Die Zugprobe (d.h. der Körperanschnitt 2) schnürt vor dem Reißen ein und verringert lokal ihre Querschnittsfläche Dadurch bildet sich die Körper-Einkerbung 41 aus. Das Einschnüren erfolgt typischer Weise an der Stelle, an der die Zugkraft auf die Zugprobe ausgeübt wird. Bei einem Zug an dem Grundkörper 1 ist dies die Stelle des Übergangs zwischen Grundkörper 1 und Körperabschnitt 2. Bei Zug an dem freien Ende des Körperabschnitts 2 wird das freie Ende des Körperabschnitts 2 in eine Zugform eingespannt (Klemmbacken), an der dann in Richtung des freien Endes gezogen wird. In diesem Fall bildet sich die Einschnürung am Ende der Zugform in dem Körperabschnitt 2 (oder auch an Stelle des Übergangs zwischen Grundkörper 1 und Körperabschnitt 2) aus. Entsprechend kann die Körper-Einkerbung vor oder nach dem Ausbildung des Kopfeinschnitts 2 in den Körperabschnitt 2 eingebracht werden.

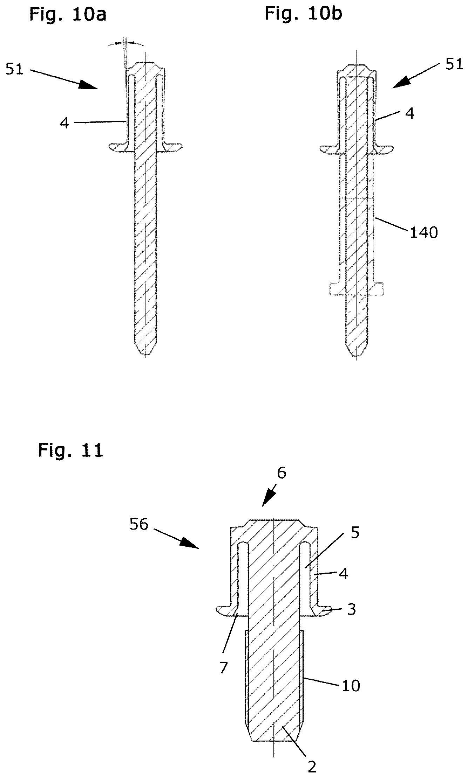

In einem abschließenden Prägeprozess oder entsprechenden Zwischenschritten können, wie grundsätzlich bereits bekannt, können Sonderkonturen in die Oberfläche oder Außenseite des Blindniets eingebracht werden. Beispielsweise können in den Kopfabschnitt 4 Konturen eingebracht werden zum Steuern des Ausbildens des Schließkopfs 8, indem bestimmte Abschnitte durch geeignete Prägungen verstärkt und/oder geschwächt werden. Hierdurch lassen sich bspw. bevorzugte Umbiegepunkte beim Verformen des Kopfabschnitts zum Schließkopf definieren. Wie in Fig. 10a dargestellt, kann das Einprägen von Sonderkonturen ohne in dem Ringspalt 5 aufgenommene Fließhülse 140 erfolgen. In diesem Fall wird der Kopfabschnitt 4 beim Prägen eingedrückt. Dies kann zu einer gegenüber der Axialrichtung verkippten Oberflächenrichtung führen, bspw. einer abschnittsweise konischen Außenkontur. Wenn dagegen, wie in Fig. 10b dargestellt, während des Prägens die Fließhülse 140 in den Ringspalt aufgenommen ist, verändert sich die Grundform des Kopfabschnitts 2 nicht. Dieser weist grundsätzlich (abgesehen von den Prägungen der Sonderkonturen selbst) einen konstanten Außendurchmesser auf. Als weitere Sonderkontur kann auf dem Kopfabschnitt 4 eine Rändelung bspw. in axialer Längsrichtung und oder in radialer Querrichtung erzeugt werden.

Durch Kombination des Umformprozesses mit einem speziellen Glühverfahren entsteht ein unterschiedliches Gefüge in den einzelnen Bereichen des Befestigungsmittels 51, 52, 53, 54, 55, 56, das für die Anwendung vorteilhaft sein kann. Beispielsweise kann eine höhere Festigkeit im Nietdorn (Körperabschnitt 2) und geringere Festigkeit im Schaftbereich (Kopfabschnitt 4 bzw. Umformbereich zum Ausbilden des Setzkopfes) erreicht werden. Das kann durch eine partielle lokale Wärmebehandlung erreicht werden, aber auch bei einer speziellen Wärmebehandlung des gesamten Befestigungsmittels 51, 52, 53, 54, 55, 56, indem die zuvor durch die Umformung veränderten Materialstrukturen und Eigenspannungen im Werkstoff, die je nach Verformungsgrad im jeweiligen Bereich unterschiedlich sein können, sich bei entsprechendem Wärmeeinfluss unterschiedlich verändern.

Unterschiedliche Dicken bzw. Volumina des Befestigungsmittels erwärmen sich unterschiedlich schnell, was zu verschiedenen Härtegraden führt. Geeignete Parameter (wie insbesondere Temperaturen, Einwirkdauer und/oder Bereich der Erhitzung) hierzu findet der Fachmann in einfachen Versuchen.

In ähnlicher Weise können auch Sonderkonturen auf dem Körperabschnitt 2 eingeprägt werden, bspw. als Rändelung in radialer Querrichtung als Futterbackengreifhilfe für ein Blindniet-Setzgerät.

Fig. 11 zeigt eine weitere erfindungsgemäße Ausführungsform eines Befestigungs- oder Verbindungsmittels, das als Blindnietschraube 56 mit einem Körperabschnitt 2, einem Kragenabschnitt 3, einem hülsenförmigen Kopfabschnitt 4, einem Ringspalt 5 und einem Übergangsbereich 6 einteilig aus einem Grundkörper 1 gebildet ist. Insoweit ist die Blindnietschraube 56 genauso aufgebaut und hergestellt wie der Blindniet 51. Auf die vorstehende Beschreibung wird verwiesen.

In dem Körperbereich 2 ist als Sonderkontur ein Außengewinde 10 aufgeprägt. Hierdurch entsteht eine Blindnietschraube, an der weitere Bauteile bspw. mittels einer Mutter festlegbar sind. In dem in Fig. 11 gezeigten Beispiel ragt das Außengewinde nicht in den Ringspalt 5 hinein. Dies kann also vor oder nach dem Tiefziehen des Kopfabschnitts 4 in dem Verfahrensschritt S6 erfolgen.

Ähnlich wie die Körper-Einkerbung 41 kann auch das Außengewinde 10 vor dem Tiefziehen (Verfahrensschritt S6) erfolgen. Dann kann das Außengewinde 10 von dem Kopfabschnitt 4 überfließt werden und zumindest teilweise in den Ringspalt 5 hineinragen. Diese Ausführungsform ist in Fig 11 nicht dargestellt.

Das Erzeugen von Gewinden mit einer bspw. kegeligen Matrize zur Erzeugung einer Radialbewegung durch Axialbewegung beim Fließpress- bzw. Umformprozess ist dem Fachmann grundsätzlich bekannt und muss daher an dieser Stelle nicht näher erläutert werden.

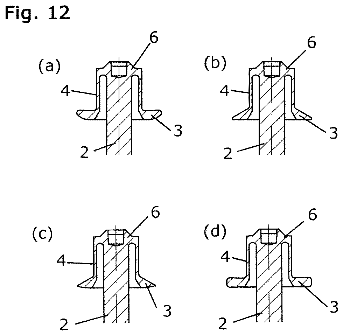

In den bisher beschrieben bzw. gezeigten Ausführungsformen des Befestigungsmittels 51, 52, 53, ,54 ,55, 56 (mit Ausnahme der Varianten in den Fig. 1a und 1b) haben einen als Flachrundkopf ausgebildeten Kragen 3. Je nach Einsatzzweck können die Kragen 3 auch anders ausbildet sein. In Fig. 12 sind verschiedene Varianten (a) bis (d) von Kragen 3 gezeigt, die in Variante (a) als Flachrundkopf (wie bisher beschrieben), in Variante (b) als Senkkopf, in Variante (c) als Linsensenkkopf und in Variante (d) als Flachkopf ausgebildet sind. Diese Auflistung ist nicht abschließend. Auch auf spezielle Anwendungszwecke ausgerichtete Varianten von Kragen können durch den Fachmann in dem beschriebenen Umformverfahren hergestellt werden.

### Bezugszeichenliste

- 1: zylindrischen Grundkörper
- 2: Körperabschnitt
- 3: Kragenabschnitt
- 3': Vorkragen
- 4: Kopfabschnitt
- 5: Ringspalt
- 6: Übergangsbereich
- 7: Ringspaltnut
- 8: Schließkopf
- 9: Stirnfläche (synonym auch Stirnseite)
- 10: Sonderkontur (Außengewinde)
- 31: verbleibende Materialstärke
- 32: Sollbruchstelle als mittige Stirnflächen-Ausnehmung (Vertiefung)
- 33: Sollbruchstelle als konzentrische Stirnflächen-Nut (Vertiefung)
- 34: Sollbruchstelle als konzentrische Stirnflächen-Nut mit Perforierung (Vertiefung)
- 35: Querstreben
- 41: Sollbruchstelle als Körper-Einkerbung im Körperabschnitt
- 42: Abbruchstelle
- 51: Blindniet (Befestigungs- oder Verbindungsmittel)
- 52: Blindniet mit Sollbruchstelle
- 53: Blindniet mit Sollbruchstelle
- 54: Blindniet mit Sollbruchstelle
- 55: Blindniet mit Sollbruchstelle
- 56: Blindnietschraube (Befestigungs- oder Verbindungsmittel)
- 70: Mittelachse (Axialrichtung)
- 100: Draht
- 101: Schneidvorrichtung
- 102: gefastes Ende
- 103: Durchgangsöffnung
- 104: Kopfstift
- 105: Auswerfstift
- 110: Durchgangsöffnung
- 111: Kopfstift
- 112: Auswerfstift
- 113: Konturierte Stirnfläche
- 120: Durchgangsöffnung
- 121: Vorkragenaussparung
- 122: Kopfmacherform
- 123: Durchgangsöffnung
- 124: Kopfstift
- 124a: hohlzylinderförmige Kopfstifthülse
- 124b: Kopfstifteinsatz
- 125: Auswerfstift
- 130: Durchgangsöffnung
- 131: Kragenaussparung
- 132: Wulst
- 133: Auswerfstift
- 140: Fließhülse
- 141: Hohlzylinder
- 142: Sockelabschnitt
- 143: Stirnseite des Hohlzylinders
- 147: Auswerfstift
- 148: Abstützringhülse
- 149: Durchgangsöffnung
- 150: Ziehrichtung
- 160: Matrizenwerkzeug
- 161: Durchgangsöffnung
- 162: Backen des Matrizenwerkzeugs
- 163: Backenkörper
- 164: konische Seitenfläche
- 165: axial gerichtet Seitenfläche
- 166: axial gerichteter Steg
- 167: wulstartige Kontur
- 168: zweite Kopfmacherform
- 169: Durchgangsöffnung
- 170: Druckstück
- 171: Aufnahmeöffnung
- 172: Kopfstift
- 173: Auswerfstift
- 174: Deckel
- 175: Kopfmachervorsprung
- 200: Befestigungs- oder Fügegut
- 201: Öffnung im Befestigungs- oder Fügegut
- 202: Setzweg
- 203: Länge des nichtgesetzten Blindniets
- 204: Länge des gesetzten Blindniets
- S1 - S6: Verfahrensschritte
- M1 - M7: Matrizen
- R: Radius einer Fließkante

## Patentansprüche

1. Befestigungs- oder Verbindungmittel, insbesondere Blindniet oder Blindnietschraube, mit einem Körperabschnitt (2), einem Kopfabschnitt (4) und einem an dem Kopfabschnitt (4) angeordneten Kragenabschnitt (3), wobei
der Körperabschnitt (2) stiftförmig ausgebildet ist,
der Kopfabschnitt (4) hülsenförmig ausgebildet ist und den Körperabschnitt (2) in Axialrichtung abschnittsweise umgibt,
der Kragenabschnitt (3) von einem offenen Ende des Kopfabschnitts (4) radial vorstehend ausgebildet und einteilig mit dem Kopfabschnitt (4) verbunden ist,
der Kopfabschnitt (4) an einem geschlossenen Ende in einem Übergangsbereich (6) einteilig mit einem proximalen Ende des Körperabschnitts (2) verbunden ist,
**dadurch gekennzeichnet, dass**
der Körperabschnitt (2), der Kopfabschnitt (4) und der Kragenabschnitt (3) einteilig aus einem zylindrischen Grundkörper (1) unter Ausbilden eines einseitig geschlossenen oder einseitig teilweise geschlossenen Ringspalts (5) zwischen dem Kopfabschnitt (4) und dem Körperabschnitt (2) durch Umformen, insbesondere Kaltumformen, Halbwarmumformen und/oder Warmumformen, ausgebildet sind oder der Körperabschnitt (2), der Kopfabschnitt (4) und der Kragenabschnitt (3) einteilig mittels Sinterverfahren, 3D-Druckverfahren, Druckgussverfahren oder Spritzgussverfahren ausgebildet sind.

2. Befestigungs- oder Verbindungmittel nach Anspruch 1, **dadurch gekennzeichnet, dass** in einer Stirnfläche (9) des Übergangsbereichs (6) als Sollbruchstelle nach dem Setzen des Befestigungs- oder Verbindungmittels (52, 53, 54, 55) zwischen dem Kopfabschnitt (4) und dem Körperabschnitt (2) eine Vertiefung (32, 33, 34) ausgebildet ist, wobei durch die Vertiefung (32, 33, 34) die Materialstärke im Übergangsbereich (6) der einteiligen Verbindung von Kopfabschnitt (4) und Körperabschnitt (2) reduziert wird.

3. Befestigungs- oder Verbindungmittel nach Anspruch 2, **dadurch gekennzeichnet, dass** die Vertiefung als eine in der Mitte der Stirnfläche (9) angeordnete Stirnflächen-Ausnehmung (32) und/oder als eine zu einer Mittelachse (70) des Befestigungs- oder Verbindungsmittels (52, 53, 54, 55) konzentrische Stirnflächen-Nut (33, 34) ausgebildet ist.

4. Befestigungs- oder Verbindungmittel nach einem der vorhergehenden Ansprüche, **dadurch gekennzeichnet, dass** in einer Mantelfläche des Körperabschnitts (2) eine in radialer Innenrichtung gerichtete Körper-Einkerbung (41) ausgebildet ist, wobei die Körper-Einkerbung (41) an einer axialen Position des Körperabschnitts (2) ausgebildet ist, in dem der Körperabschnitt (2) von dem hülsenförmigen Kopfabschnitt (4) umgeben ist.

5. Befestigungs- oder Verbindungmittel nach einem der vorhergehenden Ansprüche, **dadurch gekennzeichnet, dass** Sonderkonturen (10) an einer äußeren Umfangsfläche des Körperabschnitts (2) und/oder an einer äußeren Umfangsfläche des Kopfabschnitts (4) vorgesehen sind.

6. Befestigungs- oder Verbindungmittel nach einem der vorhergehenden Ansprüche, **dadurch gekennzeichnet, dass** das Befestigungs- oder Verbindungsmittel (51, 52, 53, 54, 55, 56) aus metallischem oder organischem Material besteht.

7. Befestigungs- oder Verbindungmittel nach einem der vorhergehenden Ansprüche, **dadurch gekennzeichnet, dass** der Ringspalt (5) einen in Axialrichtung und/oder in Umfangsrichtung konstanten Außendurchmesser hat.

8. Befestigungs- oder Verbindungmittel nach einem der vorhergehenden Ansprüche, **dadurch gekennzeichnet, dass** der Kopfabschnitt (4) zumindest abschnittsweise eine in Axialrichtung konische oder veränderliche Außenkontur aufweist.

9. Verfahren zur Herstellung eines Befestigungs- oder Verbindungsmittels (51, 52, 53, 54, 55, 56), insbesondere Blindniet oder Blindnietschraube, wobei das Verfahren umfasst:
- Bereitstellen eines zylinderförmigen Grundkörpers (1);
- Ausbilden eines stiftförmigen Körperabschnitts (2), eines den Körperabschnitt (2) in einer Axialrichtung abschnittsweise hülsenförmig umgebenden Kopfabschnitts (4) und eines radial von einem offenen Ende des Kopfabschnitts (4) vorstehenden Kragenabschnitts (3) durch Fließpressen des zylinderförmigen Grundkörpers (1), wobei zwischen dem Körperabschnitt (2) und dem den Körperschnitt (2) umgebenden Kopfabschnitt (4) ein Ringspalt (5) ausbildet wird und wobei der Körperabschnitt (2), der Kopfabschnitt (4) und Kragenabschnitt (3) einteilig miteinander verbunden sind.

10. Verfahren zur Herstellung eines Befestigungs- oder Verbindungsmittels (51, 52, 53, 54, 55, 56) nach Anspruch 9, **dadurch gekennzeichnet, dass** bei dem Verfahren
- in einem Verfahrensschritt (S2) an dem zylinderförmigen Grundkörper (1) der stiftförmige Körperabschnitt (2) mit einem kleineren Durchmesser als dem Durchmesser des Grundkörpers (1) an einem Ende des Grundköpers (1) ausgebildet wird und
- in einem weiteren Verfahrensschritt (S6) zum Ausbilden des Kopfabschnitts (4) der Körperabschnitt (2) in einen Hohlzylinder (141) einer Fließhülse (140) aufgenommen wird, der dem Körperabschnitt (2) abgewandte Teil des Grundkörpers (1) in eine Durchgangsöffnung (123) einer Kopfmacherform (122) aufgenommen wird und die Kopfmacherform (122) in axialer Richtung über die Fließhülse (140) bewegt wird.

11. Verfahren zur Herstellung eines Befestigungs- oder Verbindungsmittels (52, 53, 54) nach einem der Ansprüche 9 oder 10, **dadurch gekennzeichnet, dass** in einer Stirnfläche (9) des Übergangsbereichs (6) als Sollbruchstelle zwischen dem Kopfabschnitt (4) und dem Körperabschnitt (2) eine Vertiefung (32, 33, 34) ausgebildet wird, wobei durch die Vertiefung (32, 33, 34) die Materialstärke im Übergangsbereich (6) der einteiligen Verbindung von Kopfabschnitt (4) und Körperabschnitt (2) reduziert wird.

12. Verfahren zur Herstellung eines Befestigungs- oder Verbindungsmittels (55) nach einem der Ansprüche 9 bis 11, **dadurch gekennzeichnet, dass** vor oder nach dem Verfahrensschritt (S6) zum Ausbilden des Kopfabschnitts (4) in einer Mantelfläche des Körperabschnitts (2) eine in radialer Innenrichtung gerichtete Körper-Einkerbung (41) als Sollbruchstelle in dem Körperabschnitt (2) ausgebildet wird an einer axialen Position des Körperabschnitts (2), die nach dem Verfahrensschritt (S6) zum Ausbilden des Kopfabschnitts (4) innerhalb des Ringspalts (5) liegt.

13. Verfahren zur Herstellung eines Befestigungs- oder Verbindungsmittels (51, 52, 53, 54, 55, 56) nach einem der Ansprüche 9 bis 12, **dadurch gekennzeichnet, dass** der Verfahrensschritt (S4, S5) zum Ausbilden des Kragenabschnitts (3) mindestens zweischrittig erfolgt, wobei in einem ersten Verfahrensschritt (S4) zum Ausbilden des Kragenabschnitts (3) ein Vorkragen (3`) mit kleinerer radialer Ausdehnung und größerer axialer Ausdehnung als der Kragenschnitt (3) gebildet wird und in einem zweiten Verfahrensschritt (S5) zum Ausbilden des Kragenabschnitts (3) der Kragenabschnitt (3) in seiner radialen und axialen Ausdehnung gebildet wird.

14. Verfahren zur Herstellung eines Befestigungs- oder Verbindungsmittels (51, 52, 53, 54, 55, 56) nach einem der Ansprüche 9 bis 13, **dadurch gekennzeichnet, dass** das Verfahren zumindest einen weiteren der folgenden Schritte umfasst:
- Prägen von Sonderkonturen (10) an der äußeren Umfangsfläche des Körperabschnitts (2); und/oder
- Prägen von Sonderkonturen an einer äußeren Umfangsfläche des Kopfabschnitts (4);
- Reinigen und/oder Oberflächenbehandeln des Befestigungs- oder Verbindungsmittels (51, 52, 53, 54, 55, 56); und/oder
- Partielles oder vollständiges Wärmebehandeln des Befestigungs- oder Verbindungsmittels (51, 52, 53, 54, 55, 56).

15. Verwendung einer Fließhülse (140) bei der Durchführung des Verfahrens nach einem der Ansprüche 9 bis 14 zum Ausbilden eines Ringspalts (5) in einem Befestigungs- oder Verbindungsmittel (51, 52, 53, 54, 55, 56) aus einem zylindrischen Grundkörper (1) mit einem sich axial von dem zylindrischen Grundkörper (1) erstreckenden stiftförmigen Körperabschnitt (2), wobei der Durchmesser des Körperabschnitts (2) kleiner ist als der Durchmesser des zylindrischen Grundkörpers (1), wobei
die Fließhülse (140) einen Hohlzylinder (141) aufweist,
ein Innendurchmesser des Hohlzylinders (141) dem Durchmesser des Körperabschnitts (2) entspricht, so dass Material aus dem Grundkörper (1) in Hohlzylinder (140) einfließen kann, und
ein Außendurchmesser des Hohlzylinders (141) kleiner ist als der Durchmesser des zylindrischen Grundkörpers (1), so dass Material aus dem Grundkörper (1) zur Ausbildung des hülsenförmigen Kopfabschnitts (4) an dem Hohlzylinder (140) vorbei fließen kann.
